(19)

Europäisches
Patentamt
European
Patent Office
Office européen
des brevets

(11) **EP 2 597 486 A2**

(12) **EUROPEAN PATENT APPLICATION**
published in accordance with Art. 153(4) EPC

(43) Date of publication:
**29.05.2013 Bulletin 2013/22**

(21) Application number: **11809817.7**

(22) Date of filing: **08.07.2011**

(51) Int Cl.:
***G01S 19/12*** (2010.01)    ***G01S 11/06*** (2006.01)
***G01S 5/02*** (2010.01)

(86) International application number:
**PCT/KR2011/005025**

(87) International publication number:
**WO 2012/011690 (26.01.2012 Gazette 2012/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.05.2011  KR 20110048107
20.05.2011  KR 20110048102
11.02.2011  KR 20110012537
11.02.2011  KR 20110012530
21.07.2010  KR 20100070554**

(71) Applicants:
• **Korea Trade Network
Seoul 135-090 (KR)**
• **Korea Advanced Institute Of Science And
Technology
Daejeon 305-701 (KR)**

(72) Inventors:
• **HAN, Dong Soo
Daejeon 305-509 (KR)**

• **LEE, Min Kyu
Daejeon 302-830 (KR)**
• **CHANG, Lae Young
Gongju-si
Chungcheongnam-do 314-090 (KR)**
• **YANG, Hyun Il
Daegu 703-012 (KR)**
• **LEE, In Je
Jeonju-si
Jeollabuk-do 561-808 (KR)**
• **MIN, Cheol Hong
Seoul 138-910 (KR)**
• **KIM, Dong Hee
Seoul 157-872 (KR)**
• **LEE, Hwa Jin
Seongnam-si
Gyeonggi-do 463-872 (KR)**

(74) Representative: **Quinterno, Giuseppe et al
Jacobacci & Partners S.p.A.
Corso Emilia 8
10152 Torino (IT)**

(54)  **SYSTEM AND METHOD FOR LOCATION-BASED SERVICE FOR NAVIGATING INDOORS**

(57)    Embodiments for performing an indoor navigation are disclosed. In one embodiment, a location based service system includes: a plurality of access points installed in an indoor environment and configured to send Wi-Fi signals including access point identification information; a mobile terminal configured to receive a Wi-Fi signal from at least one of the access points and form a first Wi-Fi fingerprint based on the received Wi-Fi signal; and a navigation service server in communication with the mobile terminal, the navigation service server being configured to construct a plurality of Wi-Fi radio maps based on a plurality of second Wi-Fi fingerprints acquired at locations of the indoor environment, select a Wi-Fi radio map for estimating a location of the mobile terminal among the plurality of Wi-Fi radio maps, estimate the location of the mobile terminal by using a second Wi-Fi fingerprint corresponding to the first Wi-Fi fingerprint based on the selected Wi-Fi radio map, and form location information including the estimated location, wherein the first and second Wi-Fi fingerprints include received signal strength of the Wi-Fi signal and the access point identification information of the access point that sends the Wi-Fi signal.

EP 2 597 486 A2

**(Cont. next page)**

[Figure 1]

**Description**

[Technical Field]

The present disclosure generally relates to navigation systems, and more particularly to a location based service system and method for performing an indoor navigation using a Wi-Fi radio map.

[Background Art]

A location based service (LBS) is a service for checking current position information of a mobile terminal by using a global positioning system (GPS) and the like, and providing various additional services such as guidance of the road, guidance of surrounding information, traffic information, a distribution control, a rescue request, a crime report response, a location based customer relationship management and the like based on the checked location information.

It is required to locate the mobile terminal in order to use the location based service. However, the location based service, which uses the GPS satellites, cannot provide location information of the mobile terminal at regions that GPS satellite signals are weak (e.g., such as indoor environments, tunnels, underground parking places, downtown areas and the like).

To solve the problem described above, indoor location determination technologies for providing location based service at the regions that the GPS satellite signals are weak have been researched. Particularly, methods of performing location determination by using a wireless communication apparatus such as a wireless local area network, an ultra wideband wireless communication, a chirp spread spectrum, a Zigbee, a Bluetooth and the like have been researched and developed in the art.

Recently, as the diffusion of wireless communication networks spreads, millions of access points ("AP") are installed throughout downtown areas. As a result, an average of 7 to 8 Wi-Fi signals may be received in downtown areas which are densely populated with shopping centers and offices. As the installation density of APs increases, a mobile terminals, which are located in indoor environments, may estimate locations based on Wi-Fi signals.

Generally, in transmitting signals from a base station or a repeater to the mobile terminal, a transmission delay phenomenon in the base station or the repeater and a reception delay phenomenon in the mobile terminal may occur. Particularly, in the case of a mobile terminal whose location is moved, a new receiving signal is somewhat delayed and an afterimage effect caused by a previously received signal remains in the mobile terminal until the new signal is completely received. This phenomenon is a Wi-Fi signal dragging phenomenon.

In receiving the Wi-Fi signals, the Wi-Fi signal dragging phenomenon exists. When the location of the mobile terminal is estimated by using a general Wi-Fi signal based location determination methods, accuracy of the location determination worsens due to the Wi-Fi signal dragging phenomenon. Thus, one problem is that location based service such as navigation and the like may not be provided by using Wi-Fi signals based location determination methods.

[Disclosure]

[Technical Problem]

The present invention provides a location based system and method of performing an indoor navigation service that minimizes or eliminates effects of a signal dragging phenomenon.

Also, the present invention provides a location based system and method of improving accuracy of the location determination.

Further, the present invention provides a location based system and method of performing an indoor navigation service by rapidly extracting Wi-Fi fingerprints corresponding to an optimal route from a current location of the mobile terminal to a final destination.

[Technical Solution]

Embodiments for performing an indoor navigation in a location based service system are disclosed herein. In one embodiment, by way of non-limiting example, a location based service system includes: a plurality of access points installed in an indoor environment and configured to send Wi-Fi signals including access point identification information; a mobile terminal configured to receive a Wi-Fi signal from at least one of the access points and form a first Wi-Fi fingerprint based on the received Wi-Fi signal; and a navigation service server in communication with the mobile terminal, the navigation service server being configured to construct a plurality of Wi-Fi radio maps based on a plurality of second Wi-Fi fingerprints acquired at locations of the indoor environment, select a Wi-Fi radio map for estimating a location of the mobile terminal among the plurality of Wi-Fi radio maps, estimate the location of the mobile terminal by using a second Wi-Fi fingerprint corresponding to the first Wi-Fi fingerprint based on the selected Wi-Fi radio map, and form location information including the estimated location, wherein the first and second Wi-Fi fingerprints include received signal strength of the Wi-Fi signal and the access point identification information of the access point that sends the Wi-Fi signal.

In another embodiment, there is a method of performing an indoor navigation in a location based service system including a plurality of access points, which are installed in an indoor environment and configured to send Wi-Fi signals including access point identification information; a mobile terminal and a navigation service server, the method comprising: a) at the navigation service server, constructing a plurality of Wi-Fi radio maps based on a plurality of first Wi-Fi fingerprints acquired at a plurality of locations of the indoor environment; b) at the mobile terminal, receiving a Wi-Fi signal from at least one of the access points and forming a second Wi-Fi fingerprint based on the received Wi-Fi signal; c) at the navigation service server, selecting a Wi-Fi radio map for estimating a location of the mobile terminal among the plurality of Wi-Fi radio maps; and d) at the navigation service server, estimating the location of the mobile terminal by using a first Wi-Fi fingerprint corresponding to the second Wi-Fi fingerprint based on the selected Wi-Fi radio map, and forming position information including the estimated location, wherein the first and second Wi-Fi fingerprints include received signal strength of the Wi-Fi signal and the access point identification information of the access point that sends the Wi-Fi signal.

[Advantageous Effects]

The present invention may estimate a position and pass information of a mobile terminal in an indoor environment such as the inside of a building, an underground portion of a building, a tunnel and the like.

Also, the present invention may relieve or remove a Wi-Fi signal dragging phenomenon occurred in receiving the Wi-Fi signal to thereby increase accuracy of location estimation of the mobile terminal.

Also, the present invention may enhance a response speed regardless of a size of an indoor navigation service target region.

Also, the present invention may indicate the location of the user with being partitioned into regions and position regions to thereby enhance stability and reliability of the indoor navigation service.

Also, the present invention may rapidly extract the Wi-Fi fingerprints corresponding to an optimal route from a current location of the mobile terminal to a final destination, and perform indoor navigation by using Wi-Fi fingerprint information including Wi-Fi fingerprints corresponding to the optimal route without assistance of a navigation service server when executing the indoor navigation.

Also, the present invention may reduce a floor-level error in determining location of a mobile terminal to thereby increase accuracy of location estimation of the mobile terminal.

[Description of Drawings]

FIG. 1 is a block diagram showing a location based service system in accordance with a first embodiment.

FIG. 2 is a block diagram showing a terminal in accordance with the first embodiment.

FIG. 3 is a block diagram showing a navigation service server in accordance with the first embodiment.

FIG. 4 is a flow chart showing a process of constructing an indoor navigation service in accordance with the first embodiment.

FIG. 5 is a schematic diagram showing an example of a change of accuracy and precision according to increment of a partition region size.

FIG. 6 is a flow chart showing a process of deciding the size of partition regions in consideration of the accuracy and the precision together in accordance with the first embodiment.

FIG. 7 is a schematic diagram showing a construction of the indoor navigation service in accordance with the first embodiment.

FIG. 8 is a flow chart showing a process of estimating a location of the mobile terminal in accordance with the first embodiment.

FIG. 9 is a flow chart showing a process of enhancing a location estimation reliability in accordance with the first embodiment.

FIG. 10 is a schematic diagram showing an example of a shopping mall, which gathers Wi-Fi fingerprints for verifying availability, in accordance with the first embodiment.

FIG. 11 is a schematic diagram showing an example of the mobile terminal, which provides route information, in accordance with the first embodiment.

FIG. 12 is a block diagram showing a location based service system in accordance with a second embodiment.

FIG. 13 is a block diagram showing a navigation service server in accordance with the second embodiment.

FIG. 14 is a schematic diagram showing an example of assigning signal strength based index keys in accordance with the second embodiment.

FIG. 15 is a schematic diagram showing an example of assigning probabilistic rank based index keys in accordance with the second embodiment.

FIG. 16 is a flow chart showing a process of estimating a location of a mobile terminal in accordance with the second embodiment.

FIG. 17 is a schematic diagram showing an example of estimating the location of the mobile terminal in accordance with the second embodiment.

FIG. 18 is a block diagram showing a location based service system in accordance with a third embodiment.

FIG. 19 is a block diagram showing a navigation service server in accordance with the third embodiment.

FIG. 20 is a flow chart showing a process of constructing an indoor navigation service in accordance with the third embodiment.

FIG. 21 is a flow chart showing a process of estimating a location of a mobile terminal in accordance with the third embodiment.

FIG. 22 is a block diagram showing a location based service system in accordance with a fourth embodiment.

FIG. 23 is a block diagram showing a mobile terminal in accordance with the fourth embodiment.

FIG. 24 is a block diagram showing a navigation service server in accordance with the fourth embodiment.

FIG. 25 is a flow chart showing a process of constructing an indoor navigation service in accordance with the fourth embodiment.

FIG. 26 is a schematic diagram showing Wi-Fi fingerprint identification information in accordance with the fourth embodiment.

FIG. 27 is a schematic diagram showing partition regions in accordance with the fourth embodiment.

FIG. 28 is a schematic diagram showing an example of indexing Wi-Fi fingerprints to the partition regions.

FIG. 29 is a flow chart showing a process of estimating a location of the mobile terminal in accordance with the fourth embodiment.

FIG. 30 is a schematic diagram showing an optimal route in accordance with the fourth embodiment.

[Best Mode]

A detailed description may be provided with reference to the accompanying drawings.

First Embodiment

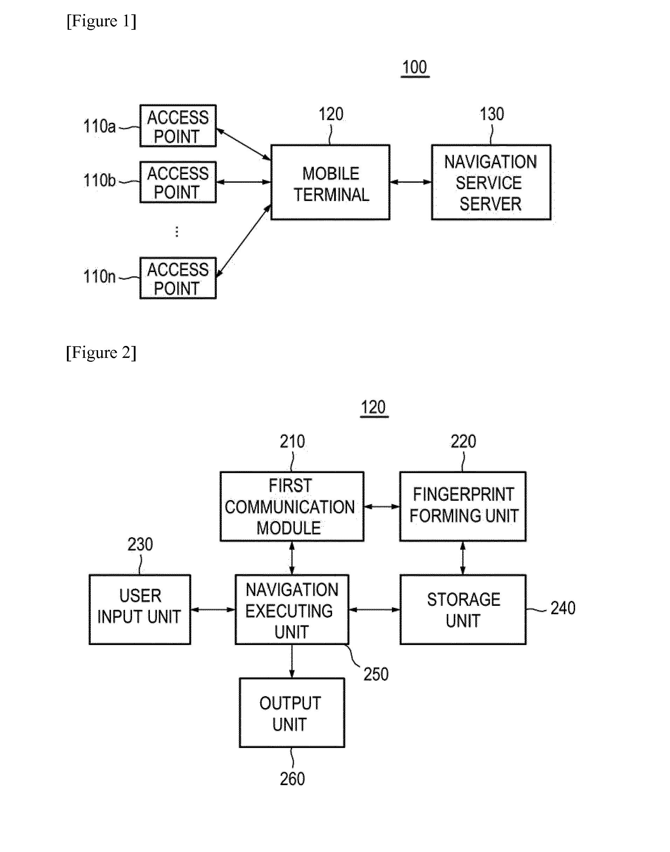

FIG. 1 is a block diagram showing a location based service system in accordance with a first embodiment. Referring to FIG. 1, the location based service system 100 may include a plurality of access points 110a to 110n, a mobile terminal 120 and a navigation service server 130.

The plurality of access points 110a to 110n, which are installed in an indoor environment such as the inside of a building, an underground portion of a building, a tunnel and the like, may be base stations for wire/wireless networks. The plurality of the access points 110a to 110n may be identified as identification information. In this embodiment, the identification information may include a media access control address. However, it should be noted herein that the identification information may not be limited thereto. Each of the access points 110a to 110n may send a Wi-Fi signal including the identification information.

The mobile terminal 120 may be configured to perform indoor navigation for displaying navigation information on a map corresponding to the indoor environment (e.g., the inside of a building, the underground portion of a building, a tunnel and the like) in which the plurality of access points 110a to 110n are installed, based on a Wi-Fi signal provided from at least one of the access points 110a to 110n and location information provided from the navigation service server 130. The navigation information may include position information and route information of the mobile terminal 120. However, it should be noted herein that the navigation information may not be limited thereto. Any type of mobile terminal, which is connected to at least one of the access points 110a to 110n, capable of receiving the Wi-Fi signals from the connected access point and performing the indoor navigation may be employed as the mobile terminal 120. For example, the mobile terminal 120 may include a smart phone, a tablet personal computer and the like.

FIG. 2 is a block diagram showing the mobile terminal in accordance with the first embodiment. Referring to FIG. 2, the mobile terminal 120 may include a first communication module 210, a fingerprint forming unit 220, a user input unit 230, a storage unit 240, a navigation executing unit 250 and an output unit 260.

The first communication module 210 may be connected to at least one of the access points 110a to 110n and the navigation service server 130. The first communication module 210 may be configured to receive the Wi-Fi signal sent from the connected access point. The first communication module 210 may be further configured to transmit a Wi-Fi fingerprint to the navigation service server 130 and receive location information from the navigation service server 130. The Wi-Fi fingerprint may be information data including a received signal strength indicator (RSSI) of the Wi-Fi signal sent from at least one of the access points 110a to 110n, and identification information (for example, a media access control (MAC) address and the like) of the access point that sends the Wi-Fi signal. However, it should be noted herein that the Wi-Fi fingerprint may not limited thereto. Any type of devices capable of transmitting and receiving data with the plurality of access points 110a to 110n and the navigation service server 130 may be employed as the first communication module 210.

The fingerprint forming unit 220 may be configured to form the Wi-Fi fingerprint based on the Wi-Fi signals provided from the first communication module 210. In one embodiment, the fingerprint forming unit 220 may be configured to measure a received signal strength of the Wi-Fi signal provided from the first communication module 210 to thereby form the received signal strength indicator. The fingerprint forming unit 220 may be further configured to detect the identification information of the Wi-Fi signal provided from the first communication module 210. The fingerprint forming unit 220 may be further configured to form the Wi-Fi fingerprint including the received signal strength indicator and the identification information.

The user input unit 230 may be configured to receive input information from a user. In one embodiment, the input information may include destination setting information for setting a final destination. The input information may further include indoor navigation start information for setting a time to begin the indoor navigation and/or indoor navigation end information for setting a time to end indoor navigation. However, it should be noted herein that the input information may not be limited thereto. The user input unit 230 may include a key button, a touch screen and the like.

The storage unit 240 may store map information of the indoor environment in which the plurality of access points 110a to 110n are installed. The storage unit 240 may further store the Wi-Fi fingerprint formed by the fingerprint forming unit 220. The storage unit 240 may further store the input information received by the user input unit 230. The storage unit 240 may further store a navigation program for executing the indoor navigation.

The navigation executing unit 250 may be configured to execute the indoor navigation based on the location information provided from the first communication module 210. As an example, the navigation executing unit 250 may execute the indoor navigation based on the location information provided from the first communication module 210 and the map information stored in the storage unit 240. As another example, the navigation executing unit 250 may execute the indoor navigation based on the location information and the map information provided from the first communication module 210. Also, the navigation executing unit 250 may be configured to form route information from the current location of the mobile terminal 120 to the final destination based on the location information provided from the first communication module 210 and the input information (i.e., destination setting information) provided from the user input unit 230. The navigation executing unit 250 may be further configured to execute the indoor navigation for displaying the route information on the map corresponding to the indoor environment.

The output unit 260 may be configured to output the indoor navigation (i.e., the map, the location information and the route information) executed by the navigation executing unit 250. The output unit 260 may include a displaying unit (not shown) for displaying the map, the location information and the route information. However, it should be noted herein that the output unit 260 may not limited thereto.

Although, the fingerprint forming unit 220 and the navigation executing unit 250 may be embodied separately, the fingerprint forming unit 220 and the navigation executing unit 250 may be embodied by a processor (e.g., a central processing unit (CPU), a microprocessor and the like).

Referring back to FIG. 1, the navigation service server 130 may be connected to the mobile terminal 120. The navigation service server 130 may be configured to estimate a location of the mobile terminal 120 based on the Wi-Fi fingerprint provided from the mobile terminal 120. The navigation service server 130 may be further configured to form the location information including the estimated location.

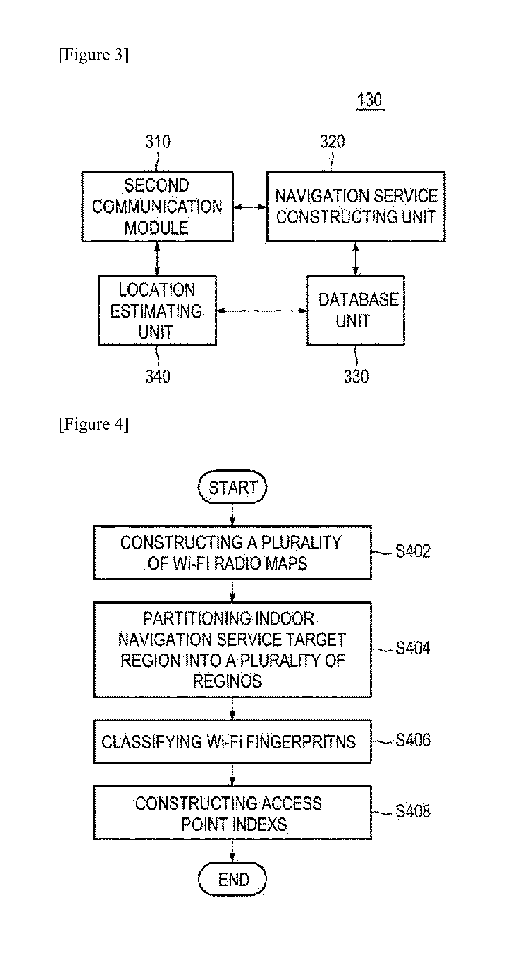

FIG. 3 is a block diagram showing the navigation service server in accordance with the first embodiment. Referring to FIG. 3, the navigation service server 130 may include a second communication module 310, a navigation service constructing unit 320, a database unit 330 and a location estimating unit 340.

The second communication module 310 may be connected to the mobile terminal 120. The second communication module 310 may be configured to receive the Wi-Fi fingerprint provided from the mobile terminal 120. The second communication module 310 may be further configured to transmit the location information provided from the location estimating unit 340 to the mobile terminal 120. Any type of device capable of transmitting and receiving data with the mobile terminal 120 may be employed as the second communication module 310.

The navigation service constructing unit 320 may be configured to construct an indoor navigation service based on the Wi-Fi fingerprints corresponding to the plurality of access points 110a to 110n. The navigation service constructing unit 320 will be described with the reference to FIG. 4.

FIG. 4 is a flow chart showing a process of constructing the indoor navigation service in accordance with the first embodiment. The navigation service constructing unit 320 may be configured to construct a plurality of Wi-Fi radio maps based on the Wi-Fi fingerprints corresponding to the plurality of access points 110a to 110n, at step S402 in FIG. 4.

In the embodiment, the Wi-Fi fingerprints for constructing the Wi-Fi radio maps may be gathered by a terminal ("a gathering terminal") capable of receiving the Wi-Fi signals and gathering the Wi-Fi fingerprints based on the received Wi-Fi signals. For example, the gathering terminal may include the mobile terminal 120. The Wi-Fi fingerprints gathered by the gathering terminal may be received through the second communication module 310. In one embodiment, the Wi-Fi radio map may include a fixed Wi-Fi radio map and a mobile Wi-Fi radio map.

The fixed Wi-Fi radio map may be a Wi-Fi radio map, which is formed based on the Wi-Fi fingerprints corresponding to the Wi-Fi signals sent from the plurality of access points 110a to 110n, under the condition that the gathering terminal is not moved (i.e., under the condition that the gathering terminal is fixed). That is, the fixed Wi-Fi radio map the Wi-Fi radio map, which is formed based on the Wi-Fi fingerprints gathered under the condition of removing a Wi-Fi signal dragging phenomenon.

The mobile Wi-Fi radio map may be a Wi-Fi radio map, which is formed based on the Wi-Fi fingerprints corresponding to the Wi-Fi signals sent from the plurality of access points 110a to 110n under the condition of moving the gathering terminal in a predetermined direction and at a predetermined speed. That is, the mobile Wi-Fi radio map may be the Wi-Fi radio map reflecting the Wi-Fi signal dragging phenomenon, which occurs by movement of the gathering terminal. Thus, an error, which occurs by the Wi-Fi signal dragging phenomenon, may be reduced by estimating the location of the mobile terminal 120 based on the Wi-Fi radio map reflecting the Wi-Fi signal dragging phenomenon when the indoor navigation is executed.

In one embodiment, the navigation service constructing unit 320 may gather the Wi-Fi fingerprints by the respective moving directions and speeds, when the mobile Wi-Fi radio maps are constructed. The navigation service constructing unit 320 may further construct various Wi-Fi radio maps based on the gathered Wi-Fi fingerprints. That is, the navigation service constructing unit 320 may construct the plurality of Wi-Fi radio maps for each of the regions of the indoor environment.

Methods of deciding the moving speed of the gathering terminal (i.e., walker), the number of the Wi-Fi radio maps and the like may be embodied in various ways. Thus, they have not all been described in detail so as not to unnecessarily obscure the present invention.

The navigation service constructing unit 320 may be configured to partition an indoor navigation service target region into a plurality of regions for each of the Wi-Fi radio maps, at step S404 in FIG. 4. The navigation service constructing unit 320 may partition the indoor navigation service target region into the plurality of regions in order to fulfill the following purposes.

A first purpose is to reduce the time for estimating the location of the mobile terminal 120 by constructing and using AP indexes, which are connected with the partition regions. A second purpose is to enhance stability of estimating the location by compounding and determining a partition region estimation and a position estimation in order to estimate the location of the mobile terminal 120. Also, the second purpose is to effectively display the location of the mobile terminal 120 by selectively using a partition region display or a position display situationally in order to display the location of the mobile terminal 120.

In partitioning the indoor navigation service target region, accuracy and precision may change according to the size settings of the partition region. In setting the size of the partition region in accordance with one embodiment, it is desirable that the navigation service constructing unit 320 may check a change of accuracy and precision while increasing the size of the partition region from a small size to a large size gradually or decreasing the size of the partition region from a large size to a small size gradually in order to decide on an optimal region size.

Accuracy in this sense means accuracy of the location estimated by the respective regions. Precision means a mean region size used in estimating in contradistinction to a reference region size. Thus, there is a trade-off effect that the accuracy improves and the precision worsens when the size of the partition regions is increased, and the precision improves and the accuracy worsens when the size of the partition regions is decreased.

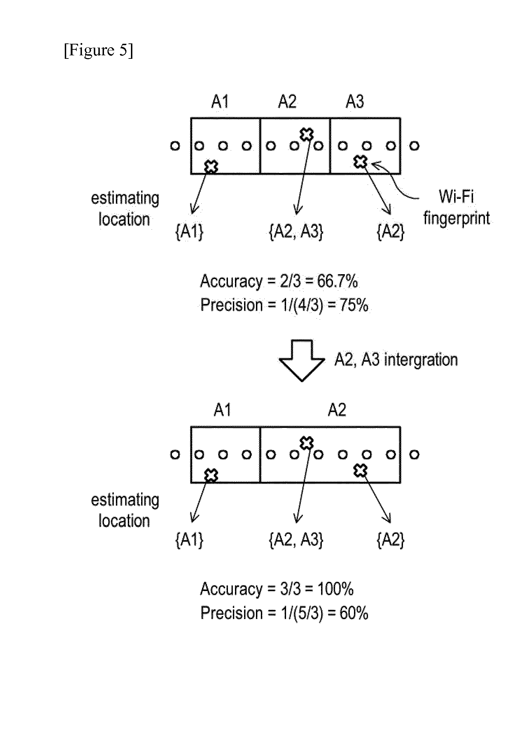

FIG. 5 is a schematic diagram showing an example of a change in accuracy and precision according to an increment in partition region size. The accuracy may improve and the precision may worsen when the size of the partition regions is increased, as shown in FIG. 5. In FIG. 5, the accuracy may improve from 66.7% to 100%, and the precision may worsen from 75% to 60%. These numbers were calculated after performing the estimations three times under similar circumstances when regions A2 and A3 are combined and the size of the combined region is increased. The precision is a result, which divides the reference area by mean area of estimating regions. That is, the precision may be calculated by using a formula "the reference area / the mean area of the estimating regions." Generally, it is desirable that the precision may be calculated by setting the size of the smallest partition region as the reference area. Thus, the precision may be calculated by setting the size of the partition region A1 as the reference area in FIG 5.

In setting the size of the partition regions in accordance with one embodiment, the accuracy target value and the precision target value are set in advance, and it is determined whether the accuracy and the precision satisfy the accuracy target value and the precision target value while changing the size of the partition regions.

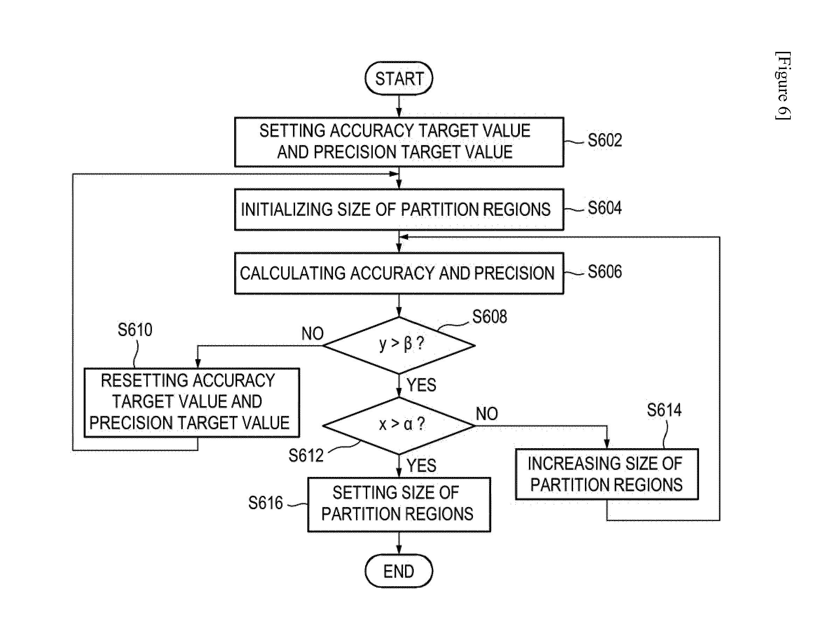

FIG. 6 is a flow chart showing a process of deciding the size of partition regions in consideration of the accuracy and the precision together in accordance with the first embodiment. In deciding the size of the partition regions in FIG. 6, the process of setting the size of the partition regions as the minimum size at the beginning, and deciding an optimal size of the partition regions while increasing the size of the partition regions gradually will be described. The navigation service constructing unit 320 may be configured to set the accuracy target value $\alpha$ and the precision target value $\beta$ before performing the size decision of the partition regions, at step S602 in FIG. 6.

The navigation service constructing unit 320 may be configured to initialize the size of the partition regions, at step S604 in FIG. 6. In one embodiment, the navigation service constructing unit 320 may partition the indoor navigation service target region into the minimum size.

The navigation service constructing unit 320 may be configured to calculate accuracy x and precision y of a location estimation for the initialized size of the partition regions, at step S606 in FIG. 6. The accuracy x and the precision y may be calculated as shown in FIG. 5. Thus, they have not been described in detail.

The navigation service constructing unit 320 may be configured to compare the calculated precision y and the precision target value $\beta$, at step S608 in FIG. 6. If it is determined that the calculated precision y does not satisfy the precision target value $\beta$ at the step S608, then the navigation service constructing unit 320 may be configured to ease and reset the accuracy target value $\alpha$ and the precision target value $\beta$, at step S610 in FIG. 6. The navigation service constructing unit 320 may perform the steps S604 to S608.

Otherwise if it is determined that the calculated precision y satisfies the precision target value $\beta$ at the step S608, then the navigation service constructing unit 320 may be configured to compare the calculated accuracy x with the accuracy target value $\alpha$, at step S612 in FIG. 6.

If it is determined that the calculated accuracy x does not satisfy the accuracy target value $\alpha$ at the step S612, then the navigation service constructing unit 320 may be configured to increase the size of the partition regions into a predetermined size, at step S614 in FIG. 6. The navigation service constructing unit 320 may perform the steps S606 to S612.

Otherwise if it is determined that the calculated accuracy x satisfies the accuracy target value $\alpha$, then the navigation service constructing unit 320 may be configured to set the size of the partition regions which is set at the step S604 as the final size of the partition regions, at step S616 in FIG. 6.

Referring back to FIG. 4, the navigation service constructing unit 320 may be configured to classify the plurality of Wi-Fi fingerprints by the respective partition regions for the Wi-Fi radio map, at step S406 in FIG. 6. Although the plurality of Wi-Fi fingerprints are assigned to the respective partition regions, it is impossible to immediately determine a partition region to which the newly received Wi-Fi fingerprint belongs in order to estimate the location of the mobile terminal 120.

Thus, the navigation service constructing unit 320 may be configured to construct access point indexes for mapping partition region information corresponding to the partition region to which the Wi-Fi fingerprint belongs, and access point identification information corresponding to the access points which take charge of the partition region, at step S408 in FIG. 4. The access point indexes may be information for connecting the access point identification information with the partition region that the Wi-Fi signal is received from the access point.

In one embodiment, the navigation service constructing unit 320 may scan all of the Wi-Fi fingerprints and check the access point identification information of the Wi-Fi signals corresponding to the Wi-Fi fingerprints. The navigation service constructing unit 320 may further detect at least one of the Wi-Fi fingerprints, which includes the access point identification information (i.e., media access control address) of a corresponding access point, based on the checked access point identification information. The navigation service constructing unit 320 may further construct connection information, that is, the access point indexes between the access point identification information and the partition regions by checking the partition region that a corresponding Wi-Fi fingerprint is gathered.

In one embodiment, information of the partition region may be immediately checked from the access point identification information of the access point included in a corresponding Wi-Fi fingerprint, without scanning all of the Wi-Fi fingerprints, in order to check a partition region from which the received Wi-Fi fingerprint is acquired based on the constructed access point indexes.

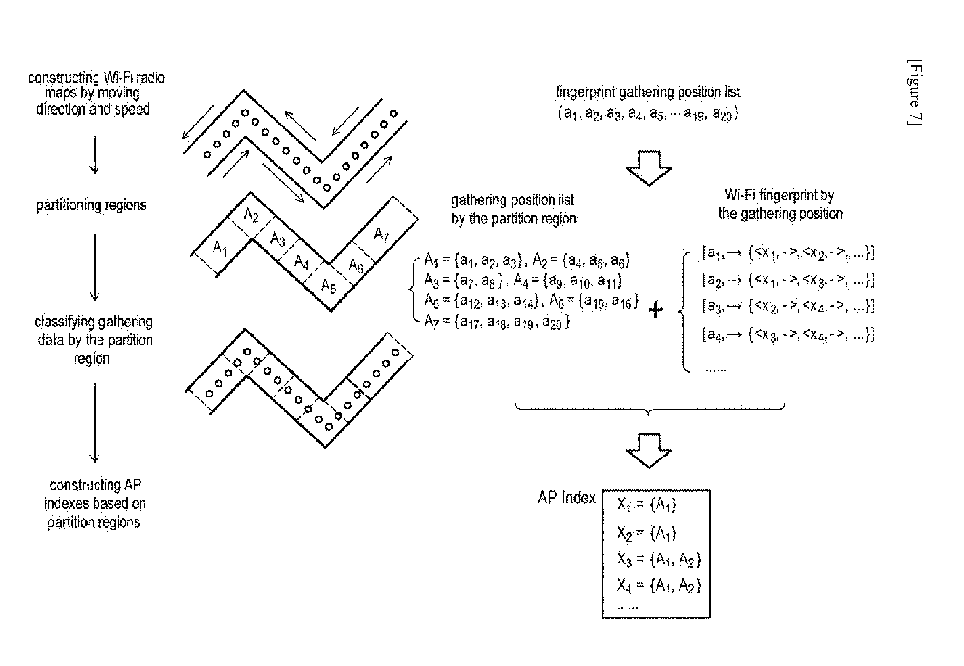

The process of constructing the indoor navigation service in accordance with the first embodiment may be performed through steps S402 to S408. The process of constructing the indoor navigation service may be checked through FIG. 7. FIG. 7 shows information, which is constructed according to the process of constructing the indoor navigation service. Thus, it has not been described in detail.

Referring back to FIG. 3, the database unit 330 may store various data for the indoor navigation service. The database unit 330 may include a first database (not shown) for storing the plurality of Wi-Fi radio maps constructed by the navigation service constructing unit 320, a second database (not shown) for storing the partition region information of the indoor navigation service target region partitioned by the navigation service constructing unit 320, and a third database (not shown) for storing the access point indexes constructed by the navigation service constructing unit 320. However, it should be noted herein that the database unit 330 may not be limited thereto.

In one embodiment, when the plurality of Wi-Fi fingerprints are classified by the respective partition regions, fields for displaying the partition regions may be added to the Wi-Fi radio map information database in which the Wi-Fi fingerprint information is stored, and the partition regions that the respective fingerprints are acquired, that is, the partition regions to which the respective Wi-Fi fingerprints belong may be indicated. Meanwhile, the partition regions to which the Wi-Fi fingerprints belong may be easily checked by adding handles, which are capable of easily accessing the Wi-Fi fingerprint gathered at a corresponding partition region, to a data structure for representing the partition regions. The connection structure between the Wi-Fi fingerprints and the partition regions may be represented by using an array structure for representing the respective partition regions as elements or nodes, or a data structure such as a graph, a tree, a directed acyclic graph and the like.

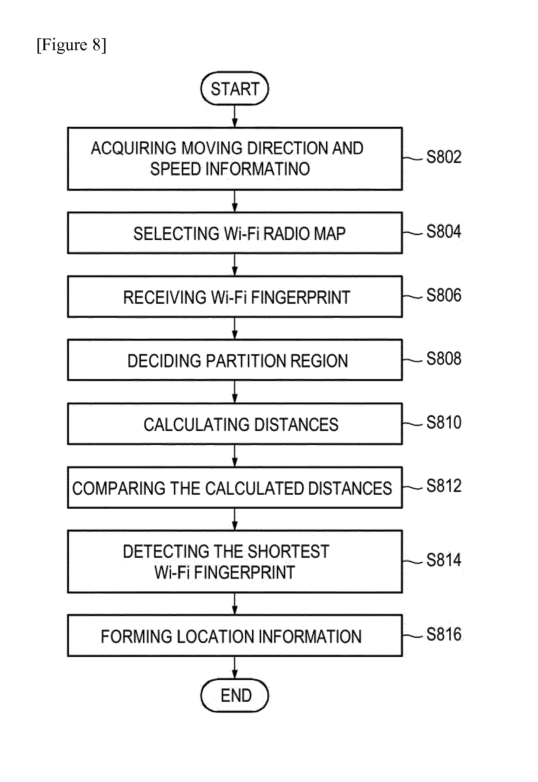

The location estimating unit 340 may be configured to estimate the location of the mobile terminal 120 based on the Wi-Fi fingerprint provided from the mobile terminal 120. The location estimating unit 340 will be described with the reference to FIG.8.

FIG. 8 is a flow chart showing a process of estimating the location of the mobile terminal in accordance with the first embodiment. The location estimating unit 340 may be configured to acquire moving direction and speed information of the mobile terminal 120, at step S802 in FIG. 8.

The moving direction information of the mobile terminal 120 may be acquired by selecting a route based on a current location of the mobile terminal 120 and a final destination selected by a user of the mobile terminal 120, and deciding a direction of the selected route.

Also, the moving speed information of the mobile terminal 120 may be acquired by using various methods. As an example, an arbitrary-estimated speed may be used initially and the moving speed of the mobile terminal 120 may be acquired by periodically checking a moving distance of the mobile terminal 120 when the indoor navigation service is provided over a predetermined time. As another example, a real-time moving speed of the mobile terminal 120 may be calculated by multiply using a triaxial accelerating sensor, a power walking sensor, a gyro sensor and the like.

The location estimating unit 340 may be configured to retrieve the database unit 330 to select a Wi-Fi radio map for estimating the location of the mobile terminal 120 among the plurality of Wi-Fi radio maps, at step S804 in FIG. 8. In the embodiment, the location estimating unit 340 may select the Wi-Fi radio map based on the acquired moving direction and speed information. That is, the location estimating unit 340 may select the Wi-Fi radio map constructed under the condition of being most similar to the moving direction and speed of the mobile terminal 120 to which the indoor navigation service is provided, among the plurality of Wi-Fi radio maps stored in the database 330.

The location estimating unit 340 may be configured to receive a Wi-Fi fingerprint provided from the mobile terminal 120 through the second module 310, at step S806 in FIG. 8. In one embodiment, the location estimating unit 340 may receive the Wi-Fi fingerprint at an interval of a predetermined update period. The update period may be set according to a characteristic of the mobile terminal 120 and the indoor navigation service target region.

The location estimating unit 340 may be configured to decide a partition region to which the received Wi-Fi fingerprint belongs based on the access point indexes stored in the database unit 330, at step S808 in FIG. 8. At least one of the partition region information, which is connected to the access point identification information (i.e., media access control address), may be mapped to the access point indexes. A Wi-Fi fingerprint may be embodied in a form such as {<x1, ->, <x4, ->, ...}. That is, a plurality of access point identification information (i.e., media access control addresses x1, x4, etc.) may be included in the Wi-Fi fingerprint. Thus, the partition region to which the Wi-Fi fingerprint belongs may be decided by using the access point indexes.

In one embodiment, the location estimating unit 340 may decide the partition region to which a corresponding Wi-Fi fingerprint belongs, by calculating an intersection among the partition regions, which are connected with the respective access point identification information (media access control address) included in one Wi-Fi fingerprint. In calculating the intersection, it may occur that the intersection becomes the empty set or the intersection includes a plurality of partition regions. When the intersection becomes the empty set, it is desirable that a partition region connected with as much access point identification information as possible is selected as a region to which a corresponding Wi-Fi finger belongs. Alternatively, when the intersection includes a plurality of partition regions, the decided partition region may be used, or at least one partition region may be selected among the plurality of partition regions by using information for the signal strength of the Wi-Fi signal additionally. For example, the number of target partition regions may be reduced by selecting the access points having a signal strength over specific signal strength as target access points

The location estimating unit 340 may be configured to calculate distances between the received Wi-Fi fingerprint and each of Wi-Fi fingerprints, which belong to the decided partition region, at step S810 in FIG. 8. In one embodiment, the location estimating unit 340 may calculate the distance between two Wi-Fi fingerprints by using equation 1 provided below.

[Equation 1]

$$L_P = \frac{1}{N} \left( \sum_{i=1}^{N} \frac{1}{W} \left| S_i - P_i \right|^P \right)^{1/P}$$

In equation 1, $L_p$ represents a generalized weighted distance, N represents the number of the access points, W represents a weighting factor, P represents a norm parameter, $S_i$ represents the received signal strength of the received fingerprint, and $P_i$ represents the received signal strength of a comparing target fingerprint.

Although the distance between two Wi-Fi fingerprints is calculated using equation 1, the distance between two Wi-Fi fingerprints may be calculated using various other methods.

The location estimating unit 340 may be configured to compare the calculated distances, at step S812 in FIG. 8. The location estimating unit 340 may be configured to detect a Wi-Fi fingerprint corresponding to the shortest distance as the Wi-Fi fingerprint which is closest to the received Wi-Fi fingerprint, at step S814 in FIG. 8.

The location estimating unit 340 may be configured to form location information of the mobile terminal 120 based on the detected Wi-Fi fingerprint, at step S816 in FIG. 8. That is, the location estimating unit 340 may decide a location (position), which gathers the detected Wi-Fi fingerprint, as a final location of the mobile terminal 120. The location estimating unit 340 may further form the location information including the decided final location. The location information may be transmitted to the mobile terminal 120 through the second communication module 310.

In providing the indoor navigation service as described above, when a location of a moving user is estimated periodically and continuously, the location of the user which moves at regular speed and direction is not estimated correctly and a wrong location, which strays from the correct location to dozens of meters forwards or backwards, may be estimated. This is because of a variation of the Wi-Fi signals or an error of the constructed data, etc. Thus, a process of correcting an error of the estimated location is required.

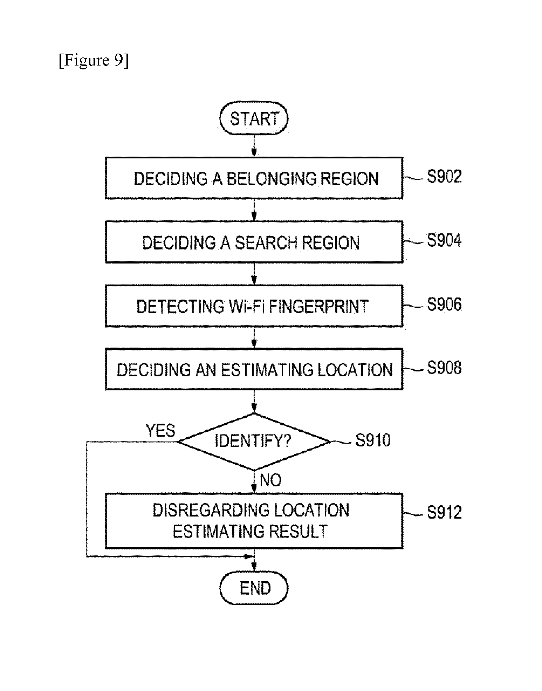

FIG. 9 is a flow chart showing a process of enhancing a location estimating reliability in accordance with the first embodiment. Various methods may be used as the methods of correcting the error of the estimated location. In one embodiment, the method of promoting reliability and stability of the location estimation by independently estimating a location of a partition region and a location of a position, and comparing the location estimation results to determine a final location will be described.

The location estimating unit 340 may be configured to decide a partition region (hereinafter, "belonging region"), to which the Wi-Fi fingerprint received from the mobile terminal 120 belongs, in order to mix and use the location estimation of the partition region and the location estimation of the position, at step S902 in FIG. 9. The methods of deciding the belonging region is similar to step S806 of FIG. 8. Thus, they have not been described in detail.

The location estimating unit 340 may be configured to decide the corresponding partition region and all of the partition regions, which are close to the corresponding partition region within a predetermined range, as a search region, at step S904 in FIG. 9. In one embodiment, the search region may be an extended region to encompass the belonging region.

The location estimating unit 340 may be configured to compare the Wi-Fi fingerprint received from the mobile terminal 120 with each of the Wi-Fi fingerprints which belong to the search region to detect a Wi-Fi fingerprint which is most similar to the Wi-Fi fingerprint received from the mobile terminal 120, at step S906 in FIG. 9. The location estimating unit 340 may be configured to decide a gathering position of the detected Wi-Fi fingerprint as the estimated location, at step S908 in FIG. 9.

The location estimating unit 340 may be configured to determine whether the belonging region decided at step S902 is identical to the partition region including the estimated location decided at step S910 in FIG. 9. If it is determined that the belonging region is not identical to the partition region, then the location estimating unit 340 may be configured to disregard the corresponding location estimation result and perform a new location estimation, at step S912 in FIG. 9.

The process as described above may be repeated by the respective location estimation periods. When disagreement of the gathering region and the partition region including the estimated location is repeated numerous times in estimating the location several times, it is desirable that a Wi-Fi fingerprint, which belongs in a region (belonging region) corresponding to the Wi-Fi fingerprint received from the mobile terminal 120, may be searched as a target Wi-Fi fingerprint and a location of the searched Wi-Fi fingerprint may be decided as the final location of the mobile terminal 120.

When the location is estimated by performing steps S902 to S912, the wrong location, which strays from the correct location to dozens of meters in a forwards or backwards direction may be prevented naturally and an effect of increasing the reliability and stability of the location estimation may be expected.

Although the navigation service constructing unit 320 in the navigation service server 130 constructs the indoor navigation service and the location estimating unit 340 estimates the location of the mobile terminal 120, the mobile terminal 120 may perform all or a part of the functions, which are performed by the navigation service server 130.

Also, although the navigation service constructing unit 320 and the location estimating unit 340 may be embodied separately, the navigation service constructing unit 320 and the location estimating unit 340 may be embodied by a processor (e.g., a central processing unit, a microprocessor and the like).

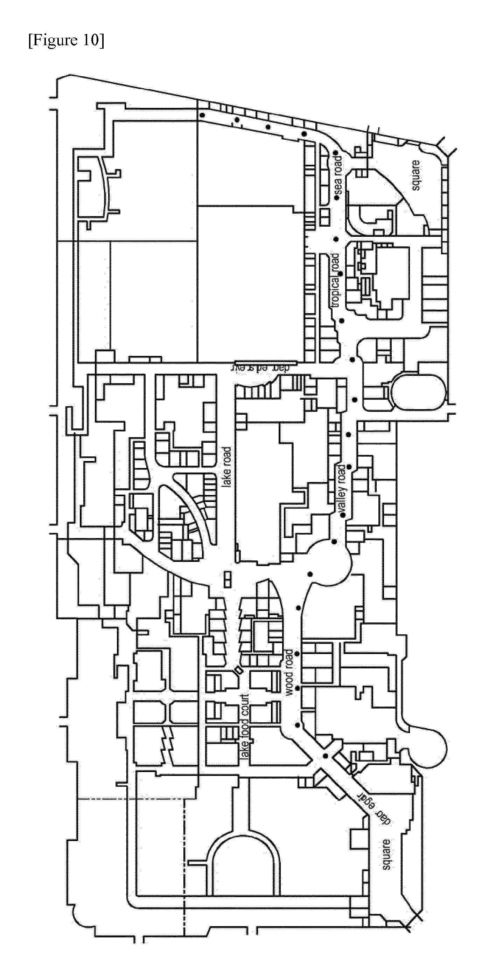

FIG. 10 is a schematic diagram showing an example of a shopping mall, which gathers Wi-Fi fingerprints for verifying availability, in accordance with the first embodiment. The Wi-Fi fingerprints were gathered by the respective 600 meter areas of the shopping mall and accuracy of the location estimation was measured in the embodiment. About 340 access points existed in the shopping mall and about 200 access points existed in the implement areas. For 212 positions, 10 Wi-Fi fingerprints were gathered by the respective positions and a total of 2,120 Wi-Fi fingerprints were gathered. 2,120 Wi-Fi fingerprints were gathered in respective directions while maintaining a waling speed in both directions. That is, about 2,120 Wi-Fi fingerprints for the fixed Wi-Fi radio map were gathered and about 4,240 Wi-Fi fingerprints for the mobile Wi-Fi radio map were gathered.

The Wi-Fi fingerprint was received at the respective selected locations every 30 meters and the location estimation was performed to examine the effect of the indoor navigation system and method in accordance with the embodiment. As the location estimation result, a location estimation error of about 8 meters occurred when the location estimation was performed based on the fixed Wi-Fi fingerprint, whereas a location estimation error of about 5 meters occurred according to the method of estimating the location in consideration of the movement of the user in accordance with the embodiment of the present invention. Thus, it had an effect that an accuracy of over 30% may be improved by using the method of the present invention in consideration of the movement of the user. Also, it was verified that the accuracy and response speed of the location determination of the user based on the Wi-Fi may be usable in practice, in embodying the indoor navigation system in accordance with one embodiment of the present invention.

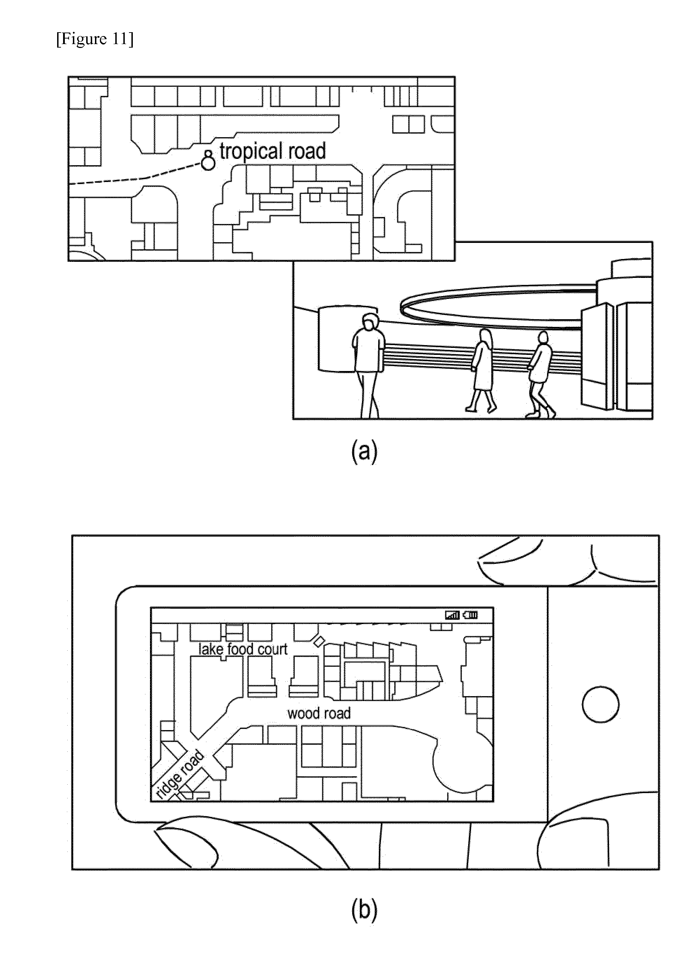

FIG. 11 is a schematic diagram showing an example of the mobile terminal, which provides route information, in accordance with the first embodiment. It was verified that the user may move along a route similar to a car navigation and the user may easily visit a destination in a complex indoor space by displaying the location of the user on a map which was displayed on the mobile terminal 120.

The method of determining the location of the user based on the region partition in accordance with one embodiment of the present invention may be effectively utilized in wide areas where not enough access points are installed. For example, since it is sufficient to show an approximate location in a unit of the partition region as a level of accuracy rather than an accurate location in a wide circumstance such as a parking place, it may be efficiently applied. That is, in providing the parking location service in accordance with the embodiment of the present invention, the location service that a parking location is appointed by a user by using the mobile terminal and the appointed parking location is guided afterward may be provided in a wide parking space that the Wi-Fi radio maps has been constructed and parking regions has been partitioned. That is, the user operates a parking location program installed in the mobile terminal in order to receive the parking location service. The parking location program gathers the Wi-Fi fingerprint of the corresponding position, determines the region to which the gathered Wi-Fi fingerprint belongs, and stores the parking location information. The stored parking location information may be used as an indoor navigation device to guide a user to the parking location of their vehicle.

If the parking location service is generalized, it is effective that the region partition is performed and stored to manage parking place information of many buildings using Wi-Fi radio maps stored at a server, and the parking location service is provided through the parking location program that is installed in the mobile terminal connected to the server.

Second embodiment

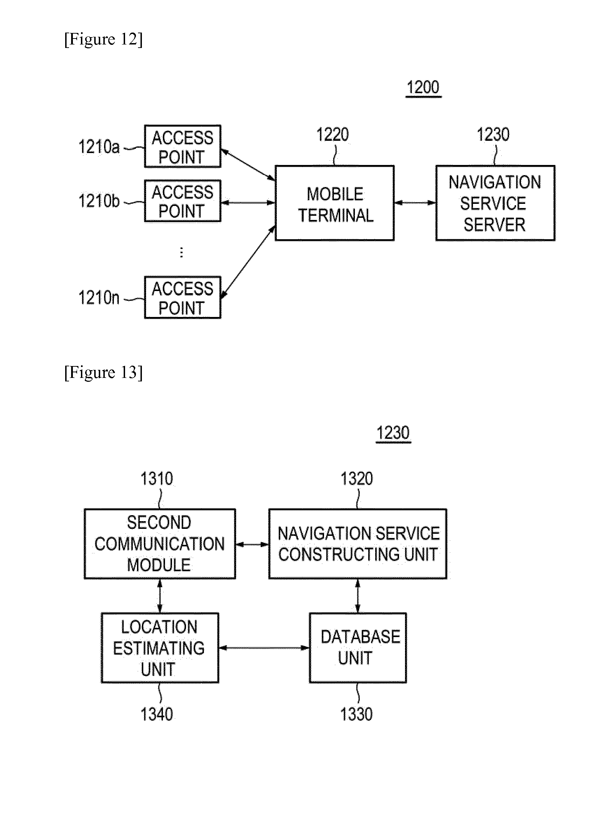

FIG. 12 is a block diagram showing a location based service system in accordance with a second embodiment. Referring to FIG. 12, the location based system 1200 may include a plurality of access points 1210a to 1210n, a mobile terminal 1220 and a navigation service server 1230.

The plurality of access points 1210a to 1210n, which are installed in indoor environments such as the inside of a building, an underground portion of a building, a tunnel and the like, may be base stations for wire/wireless networks. The plurality of access points 1210a to 1210n in the second embodiment are similar to the plurality of access points 110a to 110n in the first embodiment. Thus, they have not been described in detail.

The mobile terminal 1220 may be connected to at least one of the access points 1210a to 1210n. The mobile terminal 1220 may be configured to execute an indoor navigation for displaying navigation information on the map corresponding to the indoor environment (e.g., the inside of a building, the underground portion of a building, a tunnel and the like) in which the access points 1210a to 1210n are installed, based on a Wi-Fi signal provided from at least one of the access points 1210a to 1210n and location information provided from the navigation service server 1230. The mobile terminal 1220 in the second embodiment is similar to the mobile terminal 120 in the first embodiment. Thus, it has not been described in detail.

The navigation service server 1230 may be connected to the mobile terminal 1220. The navigation service server 1230 may be configured to estimate a location of the mobile terminal 1220 based on the Wi-Fi fingerprint provided from the mobile terminal 1220.

FIG. 13 is a block diagram showing the navigation service server in accordance with the second embodiment. Referring to FIG. 13, the navigation service server 1230 may include a second communication module 1310, a navigation service constructing unit 1320, a database unit 1330 and a location estimating unit 1340.

The second communication module 1310 may be connected to the mobile terminal 1220. The second communication module 1310 may be configured to receive the Wi-Fi fingerprint provided from the mobile terminal 1220. The second communication module 1310 may be further configured to transmit the location information provided from the location estimating unit 1340 to the mobile terminal 1220. The second communication module 1310 in the second embodiment is similar to the second communication module 310 in the first embodiment. Thus, it has not been described in detail.

The navigation service constructing unit 1320 may be configured to construct the indoor navigation service based on the Wi-Fi fingerprints corresponding to the plurality of access points 1210a to 1210n. In one embodiment, the navigation service constructing unit 1320 may construct a plurality of Wi-Fi radio maps based on the Wi-Fi fingerprints corresponding to the plurality of access points 1210a to 1210n. The method of constructing the Wi-Fi radio maps in the second embodiment is similar to the step S402 of FIG. 4 in the first embodiment. Thus, it has not been described in detail. The navigation service constructing unit 1320 may further analyze the Wi-Fi fingerprints gathered at each of the positions for each of the Wi-Fi radio maps, and assign an index key to each of the Wi-Fi fingerprints.

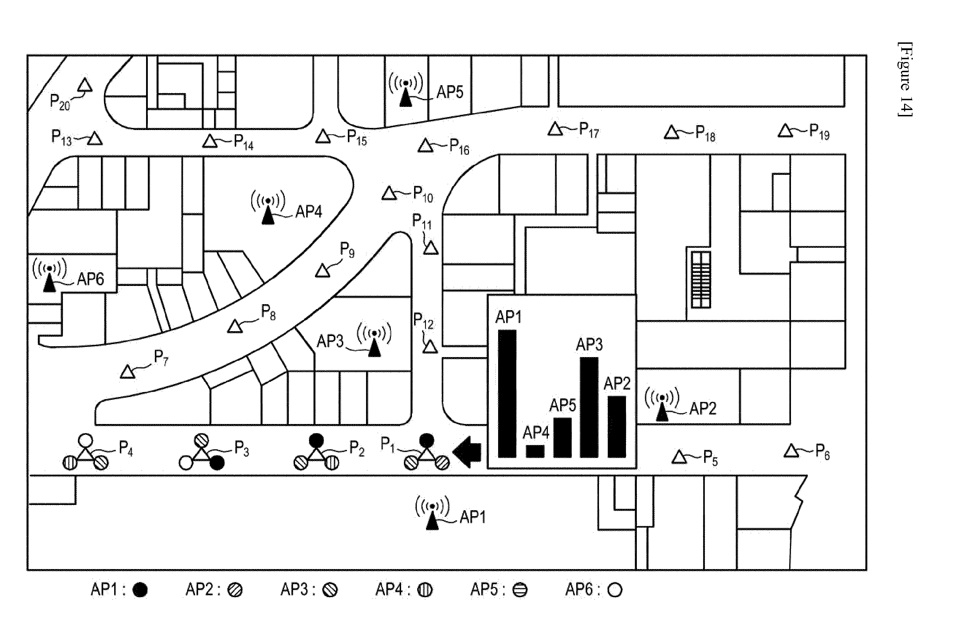

As an example, the navigation service constructing unit 1320 may analyze the Wi-Fi fingerprints gathered at each of the positions for each of the Wi-Fi radio maps, and detect signal strength of the Wi-Fi signals corresponding to the access points included in each of the Wi-Fi fingerprints. The navigation service constructing unit 1320 may further assign a signal strength based index key to each of the positions based on the detected signal strength. That is, the navigation service constructing unit 1320 may analyze the Wi-Fi fingerprint gathered at the position $P_1$ for a Wi-Fi radio map. The navigation service constructing unit 1320 may further detect the signal intensity of the Wi-Fi signals corresponding to the access points AP1 to AP5, which are included in the Wi-Fi fingerprint, as shown in FIG. 14. The navigation service constructing unit 1320 may further compare the detected signal strength and extract the predetermined number (e.g., 3) of access points AP1, AP3 and AP2 in order of strongest signal strength. The navigation service constructing unit 1320 may further assign AP1, AP3 and AP2 as the index key (that is, the signal strength based index key) to the position $P_1$. The navigation service constructing unit 1320 may assign the index key to each of the remaining positions $P_2$ to $P_{20}$ as described above. In FIG. 14, the positions $P_5$ to $P_{20}$ represent the state that the index key is not assigned.

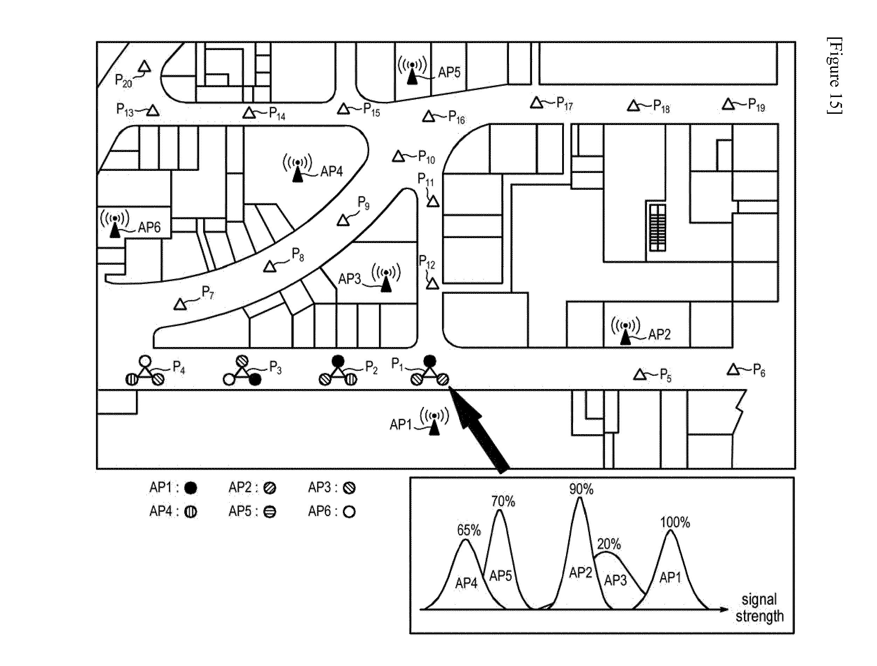

As another example, the navigation service constructing unit 1320 may analyze the Wi-Fi fingerprints (e.g., 20 Wi-Fi fingerprints) gathered at a position for each of the Wi-Fi radio maps. The navigation service constructing unit 1320 may further assign a probabilistic rank based index key to the position based on variance and a receiving probability of Wi-Fi signal corresponding to each of the access points included in a Wi-Fi fingerprint. That is, the navigation service constructing unit 1320 may analyze the plurality of Wi-Fi fingerprints gathered at a position $P_1$ for a Wi-Fi radio map, as shown in FIG. 15. The navigation service constructing unit 1320 may further detect mean signal strength of the Wi-Fi signal, the variance of the mean signal strength and the receiving probability of the Wi-Fi signal by the respective access points, which are included in each of the Wi-Fi fingerprints. The receiving probability represents a probability of the Wi-Fi fingerprint receiving the Wi-Fi signal of an access point among the plurality of Wi-Fi fingerprints. For example, when the number of Wi-Fi fingerprints received by access point AP1 is 10 among 20 Wi-Fi fingerprints, the receiving probability is 50%. In FIG. 15, the receiving probability of the access point AP1 is 100%, the receiving probability of the access point AP2 at is 90%, the receiving probability of the access point AP3 is 20%, the receiving probability of the access point AP4 is 65%, and the receiving probability of the access point AP5 is 70%, at the position $P_1$. The navigation service constructing unit 1320 may further extract the predetermined number of access points AP1, AP2 and AP3 in order of highest probability for receiving the strongest Wi-Fi signal based on the signal strength, the variance value and the receiving probability. The navigation service constructing unit 1320 may further assign the extracted AP1, AP2 and AP3 as the index key to the position $P_1$. The navigation service constructing unit 1320 may further assign the index keys to the remaining positions $P_2$ to $P_{20}$ as described above. In FIG. 15, the positions $P_5$ to $P_{20}$ represent the condition that the index keys are not assigned.

The database unit 1330 may store various data for the indoor navigation service. The database unit 1330 may include a first database (not shown) for storing the plurality of Wi-Fi radio maps to which the index keys are assigned by the navigation service constructing unit 1320. The database unit 1330 may further include a second database (not shown) for storing the plurality of Wi-Fi radio maps constructed by the navigation service constructing unit 1320.

The location estimating unit 1340 may be configured to estimate a location of the mobile terminal 1220 based on the Wi-Fi fingerprint provided from the mobile terminal 1220. The location estimating unit 1340 will be described with the reference to the accompanying drawings.

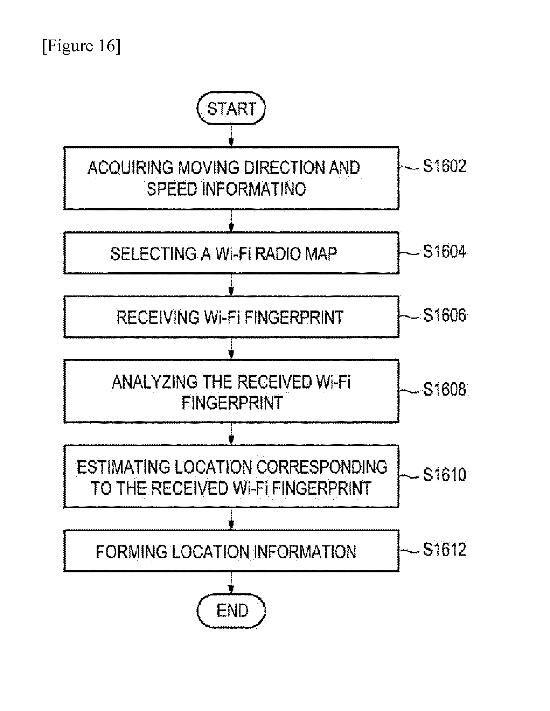

FIG. 16 is a flow chart showing a process of estimating the location of the mobile terminal in accordance with the second embodiment. The location estimating unit 1340 may be configured to acquire moving direction and speed information of the mobile terminal 1220, at step S1602 in FIG. 16. The moving direction and speed information in the second embodiment is similar to the moving direction and speed information in the first embodiment. Thus, it has not been described in detail.

The location estimating unit 1340 may be configured to retrieve the database unit 1330 to select a Wi-Fi radio map for estimating the location of the mobile terminal 1220 from the plurality of Wi-Fi radio maps, at step S1604 in FIG. 16. In the embodiment, the location estimating unit 1340 may select the Wi-Fi radio map based on the acquired moving direction and speed information. That is, the location estimating unit 1340 may select the Wi-Fi radio map constructed under the condition of being most similar to the moving direction and speed of the mobile terminal 1220 to which the indoor navigation service is provided, among the plurality of Wi-Fi radio maps stored in the database unit 1330.

The location estimating unit 1340 may be configured to receive the Wi-Fi fingerprint provided through the second communication module 1310 from the mobile terminal 1220, at step S1606 in FIG. 16. In one embodiment, the location estimating unit 1340 may receive the Wi-Fi fingerprint at an interval of a predetermined update period. The update period may be variably set according to a characteristic of the mobile terminal 1220 and the indoor navigation service target region.

The location estimating unit 1340 may be configured to analyze the received Wi-Fi fingerprint, at step S1608 in FIG. 16. The location estimating unit 1340 may be configured to estimate a location corresponding to the received Wi-Fi fingerprint from the Wi-Fi radio map, at step S 1610 in FIG. 16. The location estimating unit 1340 may be configured to form the location information including the estimated location, at step S1612 in FIG. 16. The location information may be transmitted to the mobile terminal 1220 through the second communication module 1310.

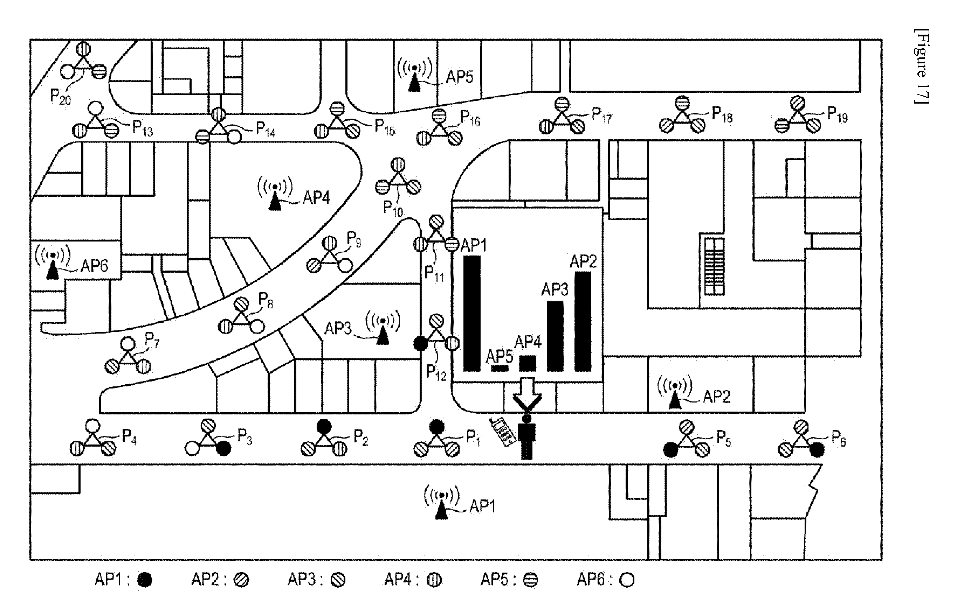

As an example, the location estimating unit 1340 may analyze the received Wi-Fi fingerprint to detect the signal strength of the Wi-Fi signal corresponding to each of the access points, which are included in the received Wi-Fi fingerprint. The location estimating unit 1340 may further compare the detected signal strength, and extract the predetermined number (e.g., 3) of the access points AP1, AP2 and AP3 in the order of strongest signal strength, as shown in FIG. 17. The location estimating unit 1340 may further detect a position $P_1$ to which the extracted access points AP1, AP2 and AP3 are assigned as the index key from the selected Wi-Fi radio map. The location estimating unit 1340 may further estimate the detected position $P_1$ as the current location of the mobile terminal 1220. The location estimating unit 1340 may further form the location information including the detected position $P_1$.

As another example, the location estimating unit 1340 may analyze the received Wi-Fi fingerprints to detect the signal strength of the Wi-Fi signal, variance of the signal strength and a receiving probability of the Wi-Fi signal, by the respective access points corresponding to each of the received Wi-Fi fingerprints. The location estimating unit 1340 may further extract a predetermined number of access points in order of probability for receiving the strongest Wi-Fi signal based on the signal strength, the variance and the receiving probability. The location estimating unit 1340 may further detect a second Wi-Fi fingerprint to which the extracted access points are assigned as the index key from the selected Wi-Fi radio map. The location estimating unit 1340 may further estimate a location corresponding to the second Wi-Fi fingerprint as the location of the mobile terminal 1220.

Although the navigation service constructing unit 1320 of the navigation service server 1230 constructs the indoor navigation service and the location estimating unit 1340 estimates the location of the mobile terminal 1220, the mobile terminal 1220 may be configured to perform all or a part of the functions that are performed by the navigation service server 1230.

Also, although the navigation service constructing unit 1320 and the location estimating unit 1340 may be embodied separately, the navigation service constructing unit 1320 and the location estimating unit 1340 may be embodied by a processor (e.g., a central processing unit, a microprocessor and the like).

Further, although all of the Wi-Fi fingerprints are brought from the Wi-Fi radio map in order to estimate the location of the mobile terminal 1220, it may be used as a method of storing the Wi-Fi fingerprints used to estimate the location of the mobile terminal 1220 in a storage unit (not shown), and bring the newly required Wi-Fi fingerprints from the Wi-Fi radio map by using a characteristic of estimating the location of the mobile terminal 1220 at a predetermined period. Thus, the time needed to receive the Wi-Fi fingerprints from the Wi-Fi radio map may be reduced.

Third Embodiment

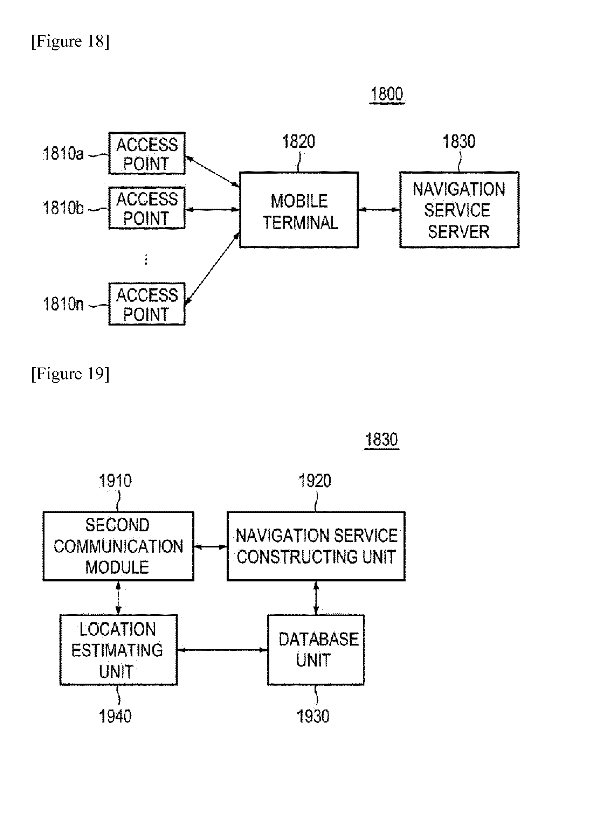

FIG. 18 is a block diagram showing a location based service system in accordance with a third embodiment. Referring to FIG. 18, the location based service system 1800 may include a plurality of access points 1810a to 1810n, a mobile terminal 1820 and a navigation service server 1830.

The plurality of access points 1810a to 1810n, which are installed in indoor environments such as the inside of a building, an underground portion of a building, a tunnel and the like, may be base stations for wire/wireless networks. The plurality of access points 1810a to 1810n in the third embodiment are similar to the plurality of access points 110a to 110n in the first embodiment. Thus, they have not been described in detail.

The mobile terminal 1820 may be connected to at least one of access points 1810a to 1810n. The mobile terminal 1820 may be configured to execute an indoor navigation for displaying navigation information on a map corresponding to the indoor environment (e.g., the inside of a building, the underground portion of a building, a tunnel and the like) in which the plurality of access points 1810a to 1810n are installed, based on a Wi-Fi signal provided from at least one of the access points 1810a to 1810n and location information provided from the navigation service server 1830. The mobile terminal 1820 in the third embodiment is similar to the mobile terminal 120 in the first embodiment. Thus, it has not been described in detail.

The navigation service server 1830 may be connected to the mobile terminal 1820. The navigation service server 1830 may be configured to estimate a location of the mobile terminal 1820 based on the Wi-Fi fingerprint provided from the mobile terminal 1820.

FIG. 19 is a block diagram showing the navigation service server in accordance with the third embodiment. Referring to FIG. 19, the navigation service server 1830 may include a second communication module 1910, a navigation service constructing unit 1920, a database unit 1930 and a location estimating unit 1940.

The second communication module 1910 may be connected to the mobile terminal 1820. The second communication module 1910 may be configured to receive the Wi-Fi fingerprint provided from the mobile terminal 1820 and transmit the location information provided from the location estimating unit 1940 to the mobile terminal 1820. The second communication module 1910 in the third embodiment is similar to the second communication module 310 in the first embodiment. Thus, it has not been described in detail.

The navigation service constructing unit 1920 may be configured to construct an indoor navigation service based on the Wi-Fi fingerprints corresponding to the plurality of access points 1810a to 1810n. The navigation service constructing unit 1920 will be described with reference to accompanying drawings.

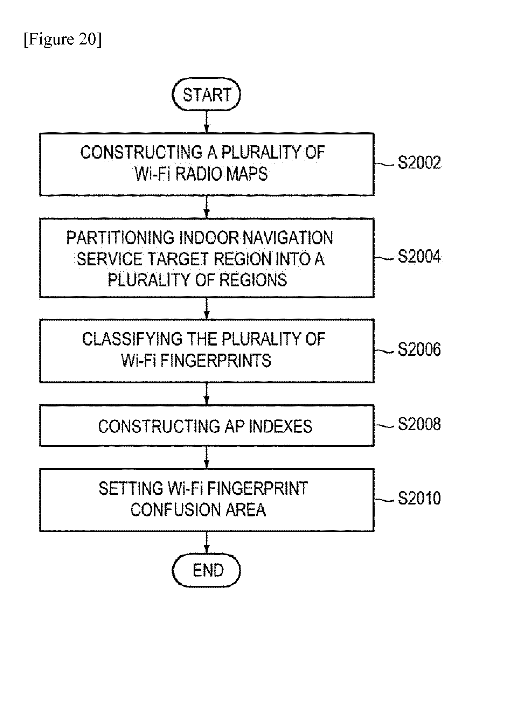

FIG. 20 is a flow chart showing a process of constructing the indoor navigation service in accordance with the third embodiment. The navigation service constructing unit 1920 may be configured to construct a plurality of Wi-Fi radio maps based on the Wi-Fi fingerprints corresponding to the plurality of access points 1810a to 1810n, at step S2002 in FIG. 20. The navigation service constructing unit 1920 may be configured to partition an indoor navigation service target region into a plurality of regions for each of the Wi-Fi radio maps, at step S2004 in FIG. 20. The navigation service constructing unit 1920 may be configured to classify the plurality of Wi-Fi fingerprints into the partition regions for each of the Wi-Fi radio maps, at step S2006 in FIG. 20. The navigation service constructing unit 1920 may be configured to construct AP indexes for mapping information of the partition regions, to which the Wi-Fi fingerprints belong, with access point identification information of the access points corresponding to the partition regions, at step S2008 in FIG. 20. The steps S2002 to S2008 in the third embodiment are similar to the steps S402 to S408 in the first embodiment. Thus, they have not been described in detail.

The navigation service constructing unit 1920 may be configured to set a Wi-Fi fingerprint confusion area ("WFCA") on the Wi-Fi radio maps to which the AP indexes are assigned, at step S2010 in FIG. 20. The WFCA may be an area that a floor-level error can occur. As an example, the navigation service constructing unit 1920 may set areas, which are set by a navigation service constructer, as the WFCA on the Wi-Fi radio maps. As another example, the navigation service constructing unit 1920 may divide the Wi-Fi fingerprints for estimating the location of the mobile terminal 1820 based on cross-validation between the constructed Wi-Fi fingerprints into n groups. The navigation service constructing unit 1920 may further set specific groups as test data and the remaining groups as learning data. The navigation service constructing unit 1920 may further perform the location estimation for each of groups to thereby set an area that the floor-level error occurs as the WFCA. Cross-validation is well known in the art. Thus, it has not been described in detail so as not to unnecessarily obscure the present invention. As yet another example, the navigation service constructing unit 1920 may perform hierarchical clustering upon the constructed Wi-Fi fingerprints based on signal similarity to thereby generate clusters (groups). The navigation service constructing unit 1920 may further extract a cluster that a plurality of floors is grouped together among the generated clusters. The navigation constructing unit 1920 may further set the WFCA so that a floor-level error can occur in estimating the location on the Wi-Fi radio maps.

Although the process of constructing the indoor navigation service in accordance with the first embodiment is used to construct the indoor navigation service in the third embodiment, the process of constructing the indoor navigation service in accordance with the first embodiment and/or the second embodiment may be used.

The database unit 1930 may store various data for the indoor navigation service. As an example, the database unit 1930 may include a first database (not shown) for storing the plurality of Wi-Fi radio maps constructed by the navigation constructing unit 1920, a second database (not shown) for storing the partition region information of the indoor navigation service target region partitioned by the navigation service constructing unit 1920, a third database (not shown) for storing the AP indexes constructed by the navigation service constructing unit 1920 and a fourth database (not shown) for storing the Wi-Fi radio maps that the WFCA is set. As another example, the database unit 1930 may include a first database (not shown) for storing the plurality of Wi-Fi radio maps to which the index keys are assigned by the navigation service constructing unit 1920, a second database (not shown) for storing the Wi-Fi radio maps that the WFCA is set. Also, the database unit 1930 may further include a second database (not shown) for storing the plurality of Wi-Fi radio maps constructed by the navigation service constructing unit 1920.

The location estimating unit 1940 may be configured to estimate the location of the mobile terminal 1820 based on the Wi-Fi fingerprint provided from the mobile terminal 1820. The location estimating unit 1940 will be described with reference to accompanying drawings.

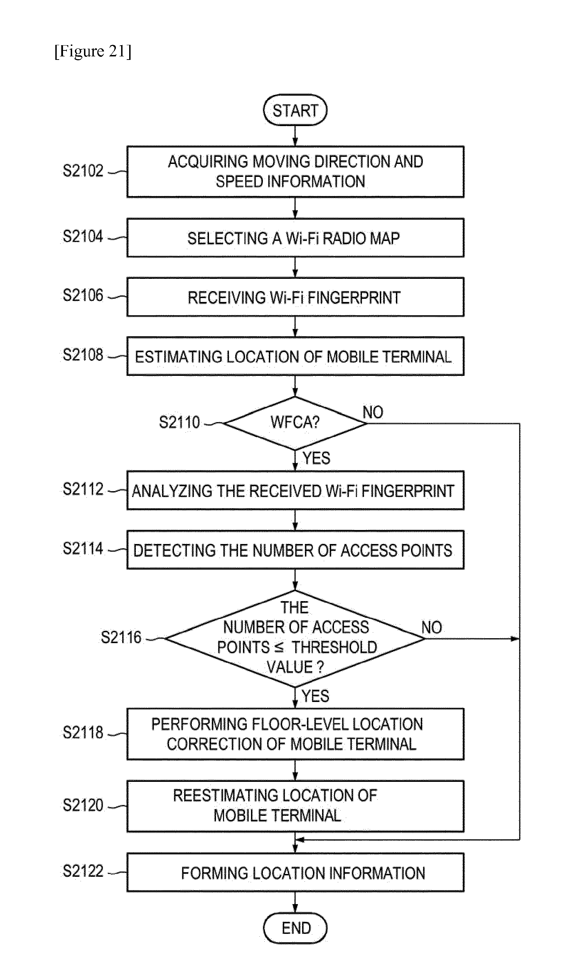

FIG. 21 is a flow chart showing a process forf estimating the location of the mobile terminal in accordance with the third embodiment. The location estimating unit 1940 may be configured to acquire moving direction and speed information of the mobile terminal 1820, at step S2102 in FIG. 21. The moving direction and speed information in the third embodiment is similar to the moving direction and speed information of the first embodiment. Thus, it has not been described in detail.

The location estimating unit 1940 may be configured to retrieve the database unit 1930 to select a Wi-Fi radio map for estimating the location of the mobile terminal 1820 among the plurality of Wi-Fi radio maps, at step S2104 in FIG. 21. In one embodiment, the location estimating unit 1940 may select the Wi-Fi radio map based on the acquired moving direction and speed information. That is, the location estimating unit 1940 may select the Wi-Fi radio map constructed under the condition of being most similar to the moving direction and speed of the mobile terminal 1820 to which the indoor navigation service is provided, among the plurality of Wi-Fi radio maps stored in the database 1930.

The location estimating unit 1940 may be configured to receive the Wi-Fi fingerprint provided through the second communication module 1910 from the mobile terminal 1820, at step S2106 in FIG. 21. In one embodiment, the location estimating unit 1940 may receive the Wi-Fi fingerprint at a predetermined update period. The update period may be variably set according to a characteristic of the mobile terminal 1820 and the indoor navigation service target region.

The location estimating unit 1940 may be configured to retrieve information from the database unit 1930 based on the received Wi-Fi fingerprint and estimate the location of the mobile terminal 1820, at step S2108 in FIG. 21. The location estimation in the third embodiment is similar to the location estimation in the first embodiment and/or the second embodiment. Thus, it has not been described in detail.

The location estimating unit 1940 may be configured to determine whether the estimated location of the mobile terminal 1820 is the WFCA, at step S2110 in FIG. 21. If it is determined that the estimated location is the WFCA, then the location estimating unit 1940 may be configured to analyze the received Wi-Fi fingerprint, at step S2112 in FIG. 21. The location estimating unit 1940 may be configured to detect the number of access points included in the received Wi-Fi fingerprint, at step S2114 in FIG. 21.

The location estimating unit 1940 may be configured to compare the number of access points with a predetermined threshold value, at step S2116 in FIG. 21. The threshold value may be variably set according to the conditions.

If it is determined that the number of the access points detected at step S2116 is equal to or less than the threshold value, then the location estimating unit 1940 may be configured to perform a floor-level location correction of the mobile terminal 1820 based on the received Wi-Fi fingerprint, at step S2116 in FIG. 21. In one embodiment, the location estimating unit 1940 may perform the floor-level location correction of the mobile terminal 1820 by using a set similarity. More particularly, the location estimating unit 1940 may perform the floor-level location correction of the mobile terminal 1820 in consideration of the set similarity between the received Wi-Fi fingerprint and the Wi-Fi fingerprint corresponding to the WFCA, that is, in consideration of Jaccord's coefficient such as equation 2 provided below as a scale of the set similarity.

[Equation 2]

$$J(A,B) = \frac{|A \cap B|}{|A \cup B|}$$

In the equation, A represents the received Wi-Fi fingerprint, B represents the Wi-Fi fingerprint corresponding to the WFCA, and J(A,B) represents Jaccard's coefficient.

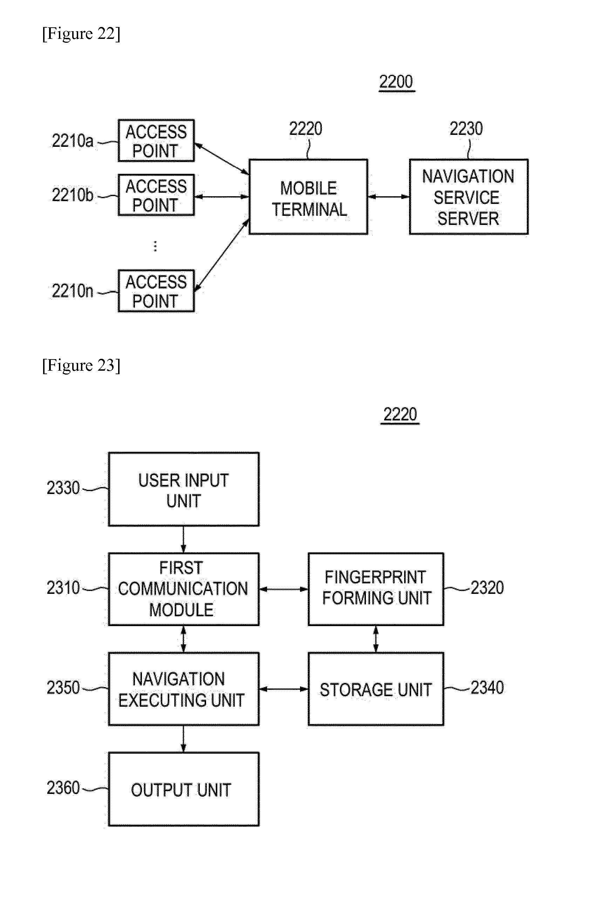

The location estimating unit 1940 may be configured to reestimate the location of the mobile terminal 1820 at the corrected floor-level location based on the received Wi-Fi fingerprint, at step S2120 in FIG. 21. The location estimating unit 1940 may be configured to form the location information including the estimated location, at step S2122 in FIG. 22. The location information may be transmitted to the mobile terminal 1820 through the second communication module 1910.

Otherwise it is determined that the location estimated at step S2110 is not the WFCA or the number of access points detected at step S2116 exceeds the threshold value, then the location estimating unit 1940 may be configured to form the location information including the estimated location.

Fourth embodiment

FIG. 22 is a block diagram showing a location based service system in accordance with a fourth embodiment. Referring to FIG. 22, the location based service system 2200 may include a plurality of access point 2210a to 2210n, a mobile terminal 2220 and a navigation service server 2230.

The plurality of access points 2210a to 2210n, which are installed in an indoor environment such as the inside of a building, an underground portion of a building, a tunnel and the like, may be base stations for wire/wireless networks. The plurality of access points 2210a to 2210n in the fourth embodiment are similar to the plurality of access points 110a to 110n in the first embodiment. Thus, they have not been described in detail.

The mobile terminal 2220 may be connected to at least one of the access points 2210a to 2210n. The mobile terminal 2220 may be configured to execute an indoor navigation for displaying navigation information on the map corresponding to the indoor environment (e.g., the inside of a building, the underground portion of a building, a tunnel and the like) in which the access points 2210a to 2210n are installed, based on a Wi-Fi signal provided from at least one of the access points 2210a to 2210n and location information provided from the navigation service server 2230.

FIG. 23 is a block diagram showing the mobile terminal in accordance with the fourth embodiment. Referring to FIG. 23, the mobile terminal 2220 may include a first communication module 2310, a fingerprint forming unit 2320, a user input unit 2330, a navigation executing unit 2340, a storage unit 2350 and an output unit 2360.

The first communication module 2310 may be connected to at least one of the access points 2210a to 2210n and the navigation service server 2230. The first communication module 2310 may be configured to receive the Wi-Fi signal sent from the at least one access points 2210a to 2210n. The first communication module 2310 may be further configured to transmit a Wi-Fi fingerprint formed by the fingerprint forming unit 2320 to the navigation service server 2230. The first communication module 2310 may be further configured to transmit input information provided from the user input unit 2330 to the navigation service server 2230. The first communication module 2310 may be further configured to receive location information and Wi-Fi fingerprint information provided from the navigation service server 2230. The location information and the Wi-Fi fingerprint information will be described below in detail. Any type of devices that are capable of transmitting and receiving data with the plurality of access points 2210a to 2210n and the navigation service server 2230 may be employed as the first communication module 2310.

The fingerprint forming unit 2320 may be configured to form the Wi-Fi fingerprint based on the Wi-Fi signal provided from the first communication module 2310. In one embodiment, the fingerprint forming unit 2320 may measure a received signal strength of the Wi-Fi signal provided from the first communication module 2310. The fingerprint forming unit 2320 may further detect the identification information of the Wi-Fi signal. The fingerprint forming unit 2320 may further form the Wi-Fi fingerprint including the received signal strength and the identification information of the Wi-Fi signal.

The user input unit 2330 may be configured to receive input information from a user. In one embodiment, the input information may include destination setting information for setting a final destination. The input information may further include indoor navigation start information for setting a start of the indoor navigation and/or indoor navigation end information for setting an end of the indoor navigation. However, it should be noted herein that the input information may not be limited thereto. The user input unit 2330 may include key buttons, touch screen and the like.

The storage unit 2340 may store map information of the indoor environment in which the plurality of access points 2210a to 2210n are installed. The storage unit 2340 may further store the Wi-Fi fingerprint formed by the fingerprint forming unit 2320. The storage unit 2340 may further store the input information received by the user input unit 2330. The storage unit 2340 may further store a navigation program for executing the indoor navigation.

The navigation executing unit 2350 may be configured to execute the indoor navigation based on the location information and the Wi-Fi fingerprint information provided from the first communication module 2310. As an example, the navigation executing unit 2350 may execute the indoor navigation for displaying the current location of the mobile terminal 2220 on the map by using the location information provided from the first communication module 2310 and the map information stored in the storage unit 2340. As another example, the navigation executing unit 2350 may execute the indoor navigation for displaying the current location of the mobile terminal 2220 on the map by using the location information and the map information provided from the first communication module 2310. Also, the navigation executing unit 2350 may be configured to execute the indoor navigation for displaying route information corresponding to an optimal route from the current location of the mobile terminal 2220 to the final destination on the map by using the Wi-Fi fingerprint information provided from the first communication module 2310.

The output unit 2360 may be configured to output the indoor navigation (i.e., map, location information and route information) executed by the navigation executing unit 2350. The output unit 2360 may include a display (not shown) for displaying the map, the location information and the route information. However, it should be noted herein that the output unit 2360 may not be limited thereto.

Although, the fingerprint forming unit 2320 and the navigation executing unit 2350 may be embodied separately, the fingerprint forming unit 2320 and the navigation executing unit 2350 may be embodied by a processor (e.g., a central processing unit (CPU), a microprocessor and the like).

Referring back to FIG. 22, the navigation service server 2230 may be connected to the mobile terminal 2220. The navigation service server 2230 may be configured to estimate the location of the mobile terminal 2220 based on the Wi-Fi fingerprint provided from the mobile terminal 2220 to thereby form the location information and the Wi-Fi fingerprint information.

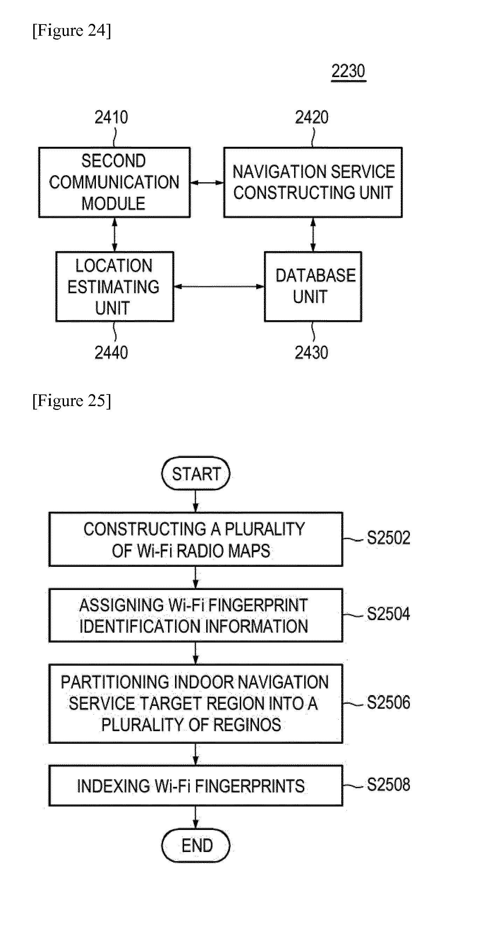

FIG. 24 is a block diagram showing the navigation service server in accordance with the fourth embodiment. Referring to FIG. 24, the navigation service server 2230 may include a second communication module 2410, a navigation service constructing unit 2420, a database unit 2430 and a location estimating unit 2440.

The second communication module 2410 may be connected to the mobile terminal 2220. The second communication module 2410 may be configured to receive the Wi-Fi fingerprint provided from the mobile terminal 2220. The second communication module 2410 may be further configured to transmit the location information and the Wi-Fi fingerprint information provided from the location estimating unit 2440 to the mobile terminal 2220.

The navigation service constructing unit 2420 may be configured to construct the indoor navigation service based on Wi-Fi fingerprints corresponding to the plurality of access points 2210a to 2210n. The navigation service constructing unit 2420 will be described with reference to accompanying drawings.

FIG. 25 is a flow chart showing a process of constructing the indoor navigation service in accordance with the fourth embodiment. The navigation service constructing unit 2420 may be configured to construct a plurality of Wi-Fi radio maps based on the Wi-Fi fingerprints corresponding to the plurality of access points 2210a to 2210n, at step S2502 in FIG. 25. Step S2502 in the fourth embodiment is similar to the step S402 in the first embodiment. Thus, it has not been described in detail.

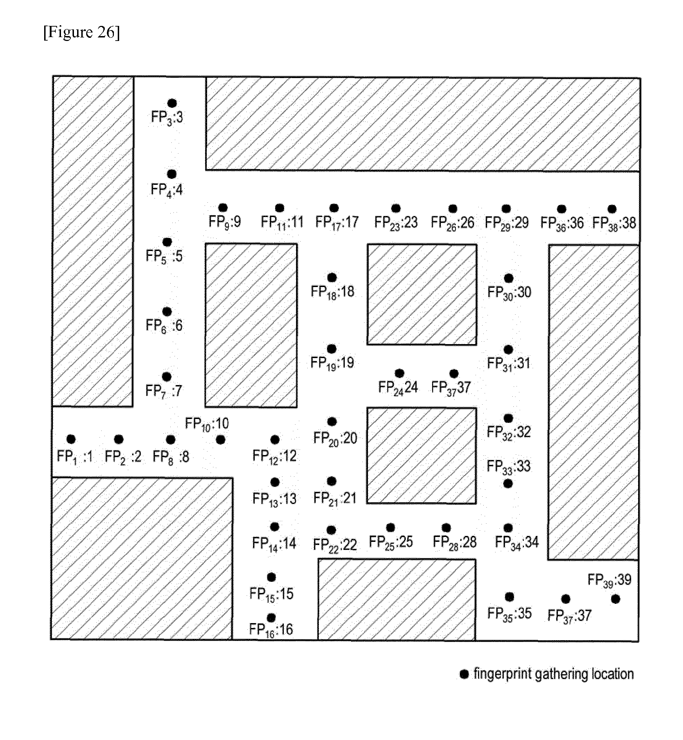

The navigation service constructing unit 2420 may be configured to assign Wi-Fi fingerprint identification information to the Wi-Fi fingerprints included in each of the Wi-Fi radio maps, at step S2504 in FIG. 25. In one embodiment, the fingerprint identification information may include identification information (ID). However, it should be noted herein that the fingerprint identification information may not be limited thereto. For example, the navigation service constructing unit 2420 may assign the fingerprint identification information, that is, the ID 1 to 39 to each of the Wi-Fi fingerprints $FP_1$ to $FP_{39}$ included in a corresponding Wi-Fi radio map, as shown in FIG. 26.

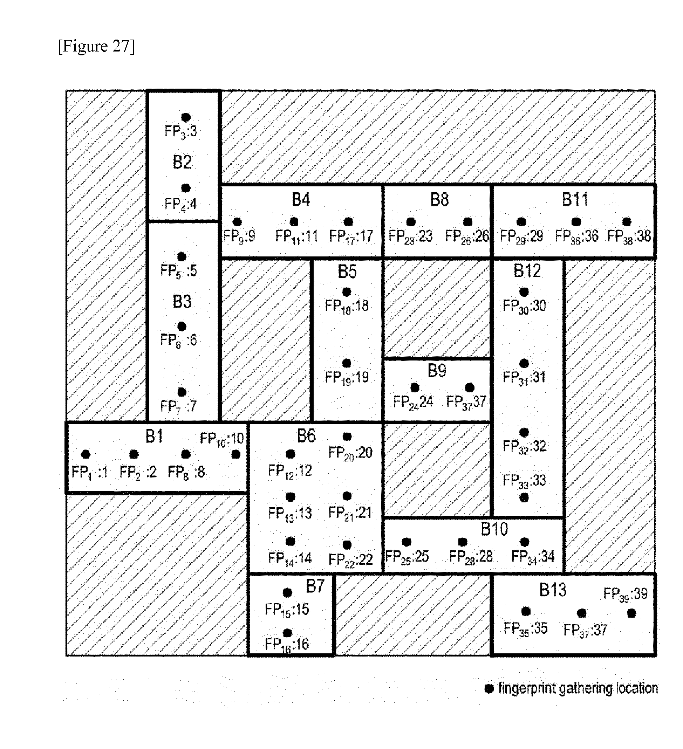

The navigation service constructing unit 2420 may be configured to partition an indoor navigation service target region into a plurality of regions for each of the Wi-Fi radio maps, to which the Wi-Fi fingerprint identification information is assigned, at step S2506 in FIG. 25. In one embodiment, the size of the partition region may be set as described in the first embodiment. Thus, it has not been described in detail. For example, the navigation service constructing unit 2420 may partition the indoor navigation service target region into a plurality of regions B1 to B 13 for the corresponding Wi-Fi radio map, to which the fingerprint identification information (ID) is assigned, as shown in FIG. 27.

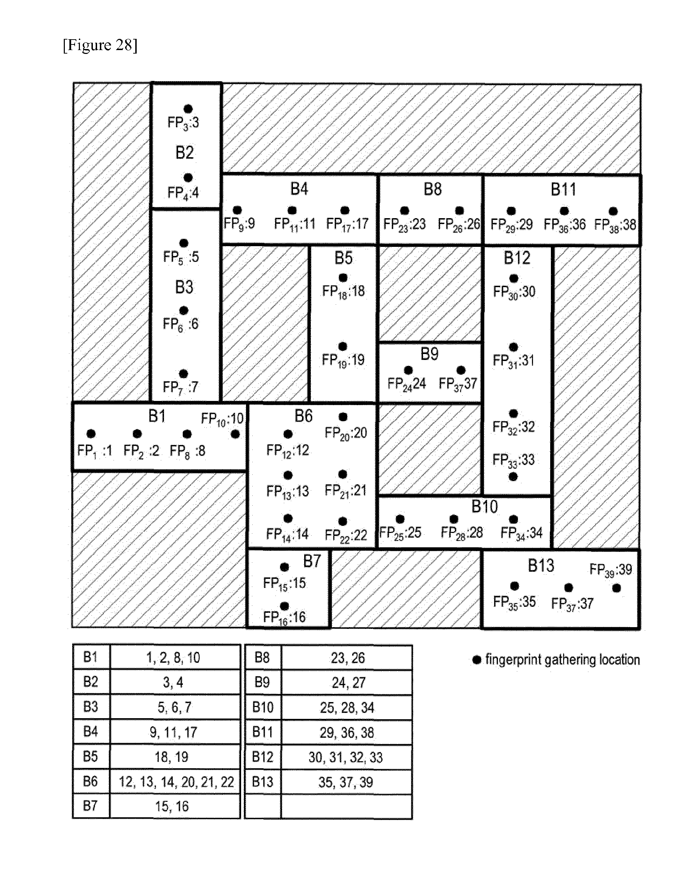

The navigation service constructing unit 2420 may be configured to index the Wi-Fi fingerprints by the respective partition regions for each of the Wi-Fi radio maps, at step S2508 in FIG 25. For example, the navigation service constructing unit 2420 may index the Wi-Fi fingerprints 1, 2, 8 and 10 to a partition region B1, as shown in FIG. 28. The navigation service constructing unit 2420 may further index the Wi-Fi fingerprints 3 and 4 to a partition region B2, as shown in FIG.

28. The navigation service constructing unit 2420 may further index the Wi-Fi fingerprints 5, 6 and 7 to a partition region B3, as shown in FIG. 28. The navigation service constructing unit 2420 may further index the Wi-Fi fingerprints 9, 11 and 17 to a partition region B4, as shown in FIG. 28. The navigation service constructing unit 2420 may further index the Wi-Fi fingerprints 18 and 19 to a partition region B5, as shown in FIG. 28. The navigation service constructing unit 2420 may further index the Wi-Fi fingerprints 12, 13, 14, 20, 21 and 22 to the partition region B6, as shown in FIG. 28. The navigation service constructing unit 2420 may further index the Wi-Fi fingerprints 15 and 16 to a partition region B7, as shown in FIG. 28. The navigation service constructing unit 2420 may further index the Wi-Fi fingerprints 23 and 26 to a partition region B8, as shown in FIG. 28. The navigation service constructing unit 2420 may further index the Wi-Fi fingerprints 24 and 27 to a partition region B9, as shown in FIG. 28. The navigation service constructing unit 2420 may further index the Wi-Fi fingerprints 25, 28 and 34 to a partition region B10, as shown in FIG. 28. The navigation service constructing unit 2420 may further index the Wi-Fi fingerprints 29, 36 and 38 to a partition region B11, as shown in FIG. 28. The navigation service constructing unit 2420 may further index the Wi-Fi fingerprints 30, 31, 32 and 33 to a partition region B12, as shown in FIG. 28. The navigation service constructing unit 2420 may further index the Wi-Fi fingerprints 35, 37 and 39 to a partition region B 13, as shown in FIG. 28.

Referring back to FIG. 24, the database unit 2430 may store various data for providing the indoor navigation service. The database unit 2430 may include a first database (not shown) for storing the plurality of Wi-Fi radio maps constructed by the navigation constructing unit 2420, a second database (not shown) for storing the fingerprint identification information assigned by the navigation service constructing unit 2420, a third database (not shown) for storing the partition region information of the indoor navigation service target region partitioned by the navigation service constructing unit 2420, and a fourth database (not shown) for storing the Wi-Fi fingerprints indexed into the partition region by the navigation service constructing unit 2420.

The location estimating unit 2440 may be configured to estimate the location of the mobile terminal 2220 based on the Wi-Fi fingerprint provided from the mobile terminal 2220. The location estimating unit 2440 may be further configured to form the Wi-Fi fingerprint information based on the input information provided from the second communication module 2410. The location estimating unit 2440 will be described with reference to the accompanying drawings.

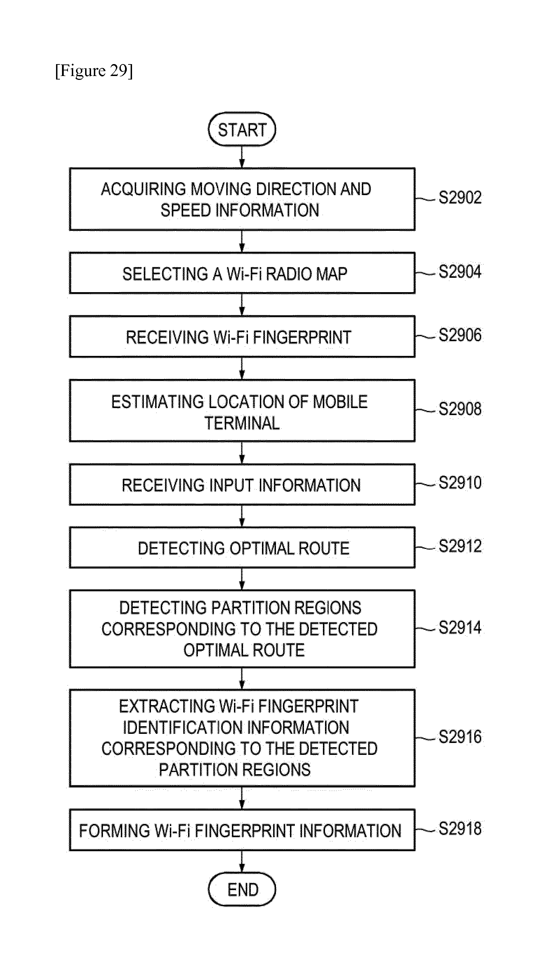

FIG. 29 is a flow chart showing a process of estimating the location of the mobile terminal in accordance with the fourth embodiment. The location estimating unit 2440 may be configured to acquire moving direction and speed information of the mobile terminal 2220, in step S2902 in FIG. 29. The moving direction and speed information in the fourth embodiment is similar to the moving direction and speed information in the first embodiment. Thus, it has not been described in detail.

The location estimating unit 2440 may be configured to retrieve the database unit 2430 and select a Wi-Fi radio map for estimating the location of the mobile terminal 2220 among the plurality of Wi-Fi radio maps, at step S2904 in FIG. 29. In one embodiment, the location estimating unit 2440 may select the Wi-Fi radio map based on the acquired moving direction and speed information. That is, the location estimating unit 2440 may select the Wi-Fi radio map constructed under the condition of being most similar to the moving direction and speed of the mobile terminal 2220 to which the indoor navigation service is provided, among the plurality of Wi-Fi radio maps stored in the database 2430.

The location estimating unit 2240 may be configured to receive the Wi-Fi fingerprint provided through the second communication module 2410 from the mobile terminal 2220, at step S2906 in FIG. 29. In one embodiment, the location estimating unit 2240 may receive the Wi-Fi fingerprint at a predetermined update period. The update period may be variably set according to a characteristic of the mobile terminal 2220 and the indoor navigation service target region.

The location estimating unit 2240 may be configured to estimate the location of the mobile terminal 2220 based on the received Wi-Fi fingerprint and the selected Wi-Fi radio map, at step S2908 in FIG. 29. That is, the location estimating unit 2240 may decide a partition region to which the received Wi-Fi fingerprint belongs, based on the AP indexes stored in the database unit 2430, as described in the first embodiment. The location estimating unit 2240 may further calculate distances between the received Wi-Fi fingerprint and each of the Wi-Fi fingerprints, which belong to the decided partition region. The location estimating unit 2240 may further compare the calculated distances to detect a Wi-Fi fingerprint corresponding to the shortest distance as a Wi-Fi fingerprint, which is closest to the received Wi-Fi fingerprint. The location estimating unit 2240 may further decide a gathering location (position) of the detected Wi-Fi fingerprint as the final location of the mobile terminal 2220. Optionally, the location estimating unit 2240 may form location information including the estimated location. The location information, which is formed by the location estimating unit 2240, may be transmitted to the mobile terminal 2220 through the second communication unit 2410. Thus, the mobile terminal 2220 may execute the indoor navigation, which displays the current location of the mobile terminal 2220 on the map based on the received location information.

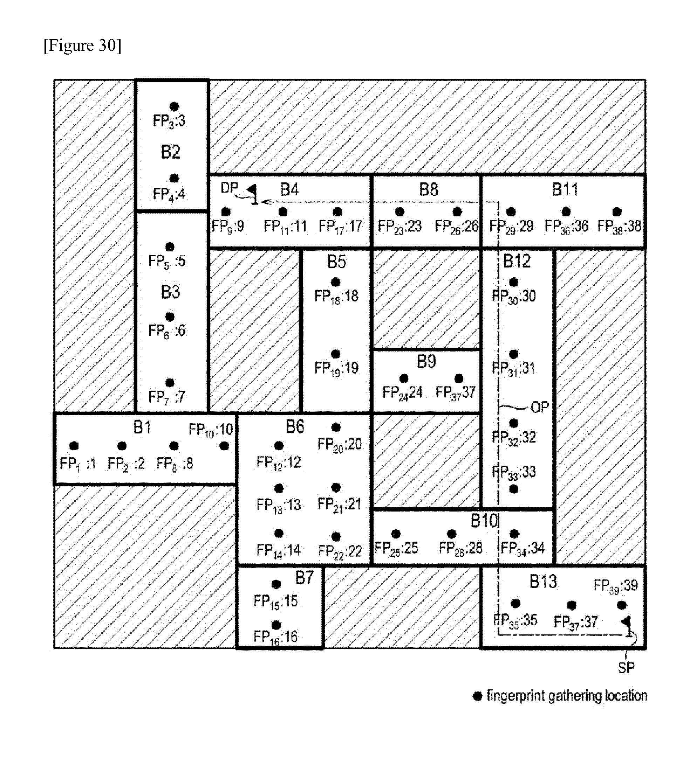

The location estimating unit 2240 may be configured to receive the input information provided through the second communication module 2410 from the mobile terminal 2220, at step S2910 in FIG. 29. The location estimating unit 2240 may be configured to detect an optimal route from the current location of the mobile terminal 2220 to the final destination, at step S2912 in FIG. 29. For example, the location estimating unit 2240 may set the current location of the mobile terminal 2220 as a start location SP on the selected Wi-Fi radio map, as shown in FIG. 30. The location estimating unit 2240 may further set a location corresponding to the input information as the destination location DP, as shown in FIG. 30. The location estimating unit 2240 may further detect the optimal route OP between the start location SP and the destination location DP, as shown in FIG. 30. The methods of detecting the optimal route are well known in the art. Thus, they have not been described in detail so as not to unnecessarily obscure the present invention.

The location estimating unit 2240 may be configured to detect partition regions corresponding to the detected optimal route, at step S2914 in FIG. 29. The location estimating unit 2240 may be configured to extract Wi-Fi fingerprint identification information corresponding to the detected partition regions, at step S2916 in FIG. 29. For example, the location estimating unit 2240 may extract partition regions B13, B10, B12, B11, B8 and B4 corresponding to the optimal route OP, as shown in FIG. 30. The location estimating unit 2240 may further extract the Wi-Fi fingerprint identification information 35, 37 and 39 corresponding to the detected partition region B13; the Wi-Fi fingerprint identification information 2, 28 and 34 corresponding to the detected partition region B10; the Wi-Fi fingerprint identification information 30, 31, 32 and 33 corresponding to the detected partition region B12; the fingerprint identification information 9, 36 and 38 corresponding to the detected partition region B11; the Wi-Fi fingerprint identification information 23 and 26 corresponding to the detected partition region B8; and the Wi-Fi fingerprint identification information 9, 11 and 17 corresponding to the detected partition region B4.

The location estimating unit 2240 may be configured to form Wi-Fi fingerprint information including the Wi-Fi fingerprints corresponding to the extracted Wi-Fi fingerprint identification information, at step S2918 in FIG. 29. For example, the location estimating unit 2240 may form the Wi-Fi fingerprint information including the Wi-Fi fingerprints corresponding to the extracted fingerprint identification information 35, 37, 39, 2, 28, 34, 30, 31, 32, 33, 29, 36, 38, 23, 26, 9, 11 and 17. The Wi-Fi fingerprint information, which is formed by the location estimating unit 2240, may be transmitted to the mobile terminal 2220 through the second communication module 2410. Thus, the mobile terminal 2220 may execute the indoor navigation for displaying the route information on the map by using the Wi-Fi fingerprint information.

Thus, the navigation service server 2230 may rapidly extract the Wi-Fi fingerprints corresponding to the optimal route. Also, the mobile terminal 2220 may execute the indoor navigation based on the Wi-Fi fingerprint information without assistance of the navigation service server 2230.

In another embodiment, a method of performing the indoor navigation in accordance with the present invention may be embodied as computer readable codes in a computer readable medium. The computer readable medium includes all type of computer readable apparatus. Also, a functional program, codes and code segments for embodying the method of forming the scan line data in accordance with the present invention may be inferred by programmers skilled in the art.

[Industrial Applicability]

Although embodiments have been described with reference to a number of illustrative embodiments thereof, it should be understood that numerous other modifications and embodiments can be devised by those skilled in the art that will fall within the spirit and scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A location based service system, comprising:

   a plurality of access points installed in an indoor environment and configured to send Wi-Fi signals including access point identification information;
   a mobile terminal configured to receive a Wi-Fi signal from at least one of the access points and form a first Wi-Fi fingerprint based on the received Wi-Fi signal; and
   a navigation service server in communication with the mobile terminal, the navigation service server being configured to construct a plurality of Wi-Fi radio maps based on a plurality of second Wi-Fi fingerprints acquired at locations of the indoor environment, select a Wi-Fi radio map for estimating a location of the mobile terminal among the plurality of Wi-Fi radio maps, estimate the location of the mobile terminal by using a second Wi-Fi fingerprint corresponding to the first Wi-Fi fingerprint based on the selected Wi-Fi radio map, and form location information including the estimated location,
   wherein the first and second Wi-Fi fingerprints include received signal strength of the Wi-Fi signal and the access point identification information of the access point that sends the Wi-Fi signal.

2. The location based service system of Claim 1, wherein the access point identification information includes a media access control address.

3. The location based service system of Claim 1, wherein the mobile terminal includes:

a Wi-Fi fingerprint forming unit configured to form the first Wi-Fi fingerprint based on the received Wi-Fi signal; and
a first communication module configured to receive the Wi-Fi signal sent from the access point, and transmit the first Wi-Fi fingerprint to the navigation service server.

4. The location based service system of Claim 1, wherein the navigation service server includes:

a navigation service constructing unit configured to construct the plurality of Wi-Fi radio maps corresponding to the plurality of second Wi-Fi fingerprints by the respective moving directions and speeds of the mobile terminal;
a database unit configured to store the plurality of Wi-Fi radio maps;
a location estimating unit configured to acquire a moving direction and speed of the mobile terminal, retrieve the database unit to select a Wi-Fi radio map corresponding to the acquired moving direction and speed, detect a second Wi-Fi fingerprint corresponding to the first Wi-Fi fingerprint from the selected Wi-Fi radio map, estimate a location of the detected second Wi-Fi fingerprint as the location of the mobile terminal, and form the location information including the estimated location; and
a second communication module configured to receive the first Wi-Fi fingerprint and transmit the location information to the mobile terminal.

5. The location based service system of Claim 4, wherein the mobile terminal further includes:

a user input unit configured to receive input information for setting a final destination from a user;
a navigation executing unit configured to execute an indoor navigation for displaying current location information on a map corresponding to the indoor environment based on the location information, forming route information from a current location of the mobile terminal to the final destination based on the input information, and displaying the route information on the map; and
an output unit configured to output the indoor navigation executed by the navigation executing unit.

6. The location based service system of Claim 4, wherein the navigation service constructing unit is configured to:

construct the plurality of Wi-Fi radio maps based on the plurality of second Wi-Fi fingerprints;
partition an indoor navigation service target region into a plurality of regions for each of the Wi-Fi radio maps;
classify the plurality of second Wi-Fi fingerprints by the respective partition regions for each of the Wi-Fi radio maps; and
construct access point indexes for mapping the partition region to which each of the second Wi-Fi fingerprints belongs with the access point identification information of the access points which charge the partition region.

7. The location based service system of Claim 6, wherein the Wi-Fi radio map includes at least one of a mobile Wi-Fi radio map reflecting a signal dragging phenomenon which occurs by the movement of the mobile terminal and a fixed Wi-Fi radio map which does not reflect the signal dragging phenomenon.

8. The location based service system of Claim 6, wherein the navigation service constructing unit is further configured to construct the plurality of Wi-Fi radio maps by the respective moving directions and speeds of the mobile terminal.

9. The location based service system of Claim 6, wherein the navigation service constructing unit is further configured to:

set an accuracy target value and a precision target value for estimating the location of the mobile terminal;
initialize the size of the partition regions for each of the Wi-Fi radio maps;
calculate accuracy and precision of a location estimation of the mobile terminal for the initialized size of the partition regions;
compare the calculated precision with the precision target value, if it is determined that the calculated precision does not satisfy the precision target value, ease and reset the accuracy target value and the precision target value;
if it is determined that the calculated precision satisfies the precision target value, compare the calculated accuracy with the accuracy target value, if it is determined that the calculated accuracy does not satisfy the accuracy target value, increase the size of the partition regions to a predetermined size;

if it is determined that the calculated accuracy satisfies the accuracy target value, set the size of the partition regions as the final size of the partition regions.

10. The location based service system of Claim 6, wherein the navigation service constructing unit is configured to:

select second Wi-Fi fingerprints including the access point identification information of the same access points from the second Wi-Fi fingerprints included in the Wi-Fi radio map; and
detect a partition region that the selected second Wi-Fi fingerprints are gathered and construct connection information between the access point identification information of the access point and the detected partition region.

11. The location based service system of Claim 6, wherein the location estimating unit is configured to:

acquire moving direction and speed information of the mobile terminal;
retrieve the database unit to select a Wi-Fi radio map corresponding to the acquired moving direction and speed information;
decide a partition region corresponding to the first Wi-Fi fingerprint based on the access point indexes;
calculate distances between the first Wi-Fi fingerprints and each of the second Wi-Fi fingerprints which belong to the decided partition region;
compare the distances to detect a second Wi-Fi fingerprint corresponding to the shortest distance as a Wi-Fi fingerprint which is closest to the first Wi-Fi fingerprint; and
estimate a location of the detected second Wi-Fi fingerprint as the location of the mobile terminal.

12. The location based service system of Claim 11, wherein the location estimating unit is further configured to:

decide the decided partition region and regions which are close to the decided partition region, as a search region;
decide a gathering location of a second Wi-Fi fingerprint, which is closest to the first Wi-Fi fingerprint among the second Wi-Fi fingerprints of the search region, as an estimated location; and
determine whether a partition region corresponding to the estimated location is identical to the decided partition region, if it is determined that the partition region corresponding to the estimated location is not identical to the decided partition region, disregarding the estimated location.

13. The location based service system of Claim 4, wherein the navigation service constructing unit is configured to:

construct the plurality of Wi-Fi radio maps based on the plurality of second Wi-Fi fingerprints; and
analyze the plurality of second Wi-Fi fingerprints for each of the Wi-Fi radio maps to assign an index key to each of the second Wi-Fi fingerprints.

14. The location based service system of Claim 13, wherein the navigation service constructing unit is configured to:

detect signal strength of the Wi-Fi signal corresponding to each of the access points included in each of the second Wi-Fi fingerprints;
compare the detected signal strength to extract the predetermined number of access points in order of signal strength; and
assign the extracted access points as the index key to each of the second Wi-Fi fingerprints.

15. The location based service system of Claim 14, wherein the location estimating unit is configured to:

acquire moving direction and speed information of the mobile terminal;
retrieve the database unit to select a Wi-Fi radio map corresponding to the acquired moving direction and speed information;
detect signal strength of the Wi-Fi signal by the respective access points included in the first Wi-Fi fingerprint;
compare the detected signal strength to extract the predetermined number of access points in order of signal strength;
detect a second Wi-Fi fingerprint to which the extracted access points are assigned as the index key from the selected Wi-Fi radio map; and
estimate a location of the detected second Wi-Fi fingerprint as the location of the mobile terminal.

16. The location based service system of Claim 13, wherein the navigation service constructing unit is configured to:

detect signal strength of the Wi-Fi signal based on variance in the signal strength and a receiving probability of the Wi-Fi signal by the respective access points included in each of the plurality of second Wi-Fi fingerprints; extract the predetermined number of access points in order of receiving probability for receiving the strongest Wi-Fi signal based on the detected signal strength, and variance and receiving probability for each of the plurality of second Wi-Fi fingerprints; and assign the extracted access points to each of the second Wi-Fi fingerprints as the index key.

17. The location based service system of Claim 16, wherein the location estimating unit is configured to:

acquire moving direction and speed information of the mobile terminal; retrieve the database unit to select a Wi-Fi radio map corresponding to the acquired moving direction and speed information; receive a plurality of first Wi-Fi fingerprints provided from the mobile terminal; detect signal strength of the Wi-Fi signal based on variance of the signal strength and a receiving probability of the Wi-Fi signal by the respective access points for each of the first Wi-Fi fingerprints; extract the predetermined number of access points in order of a receiving probability for receiving the strongest Wi-Fi signal based on the detected signal strength, and variance and receiving probability; detect a second Wi-Fi fingerprint to which the extracted access points are assigned as the index key from the selected Wi-Fi radio map; and estimate a location of the detected second Wi-Fi fingerprint as the location of the mobile terminal.

18. The location based service system of Claim 4, wherein the navigation service constructing unit is configured to:

construct the plurality of Wi-Fi radio maps based on the plurality of second Wi-Fi fingerprints; set a Wi-Fi fingerprint confusion area that a floor-level error occurs on the plurality of Wi-Fi radio maps.

19. The location based service system of Claim 18, wherein the location estimating unit is configured to:

acquire moving direction and speed information of the mobile terminal; retrieve the database unit to select a Wi-Fi radio map corresponding to the acquired moving direction and speed information; estimate the location of the mobile terminal from the selected Wi-Fi radio map based on the first Wi-Fi fingerprint; determine whether the estimated location is the Wi-Fi fingerprint confusion area, if it is determined that the estimated location is the Wi-Fi fingerprint confusion area, analyze the first Wi-Fi fingerprint to detect the number of access points included in the first Wi-Fi fingerprint; compare the detected number of access points with a predetermined threshold, if it is determined that the detected number of access points is equal to or less than the predetermined threshold, perform a floor-level location correction based on the first Wi-Fi fingerprint; and reestimate the location of the mobile terminal at the corrected floor-level location based on the first Wi-Fi fingerprint.

20. The location based service system of Claim 19, wherein the location estimating unit is configured to perform the floor-level location correction of the estimated location in consideration of a set similarity between the first Wi-Fi fingerprint and each of the second Wi-Fi fingerprints corresponding to the Wi-Fi fingerprint confusion area by using Jaccard's coefficient.

21. The location based service system of Claim 1, wherein the mobile terminal is further configured to receive input information for setting a final destination from a user.

22. The location based service system of Claim 21, wherein the navigation service server is further configured to:

assign fingerprint identification information to the second Wi-Fi fingerprints for each of the Wi-Fi radio maps; estimate a current location of the mobile terminal, based on the Wi-Fi radio map for estimating a location of the mobile terminal among the plurality of Wi-Fi radio maps and the first Wi-Fi fingerprint; and extract the fingerprint identification information of the second Wi-Fi fingerprints corresponding to an optimal route from the current location to the final destination based on the estimated current location and the input information to thereby form Wi-Fi fingerprint information.

23. The location based service system of Claim 22, wherein the mobile terminal includes:

a Wi-Fi fingerprint forming unit configured to form the first Wi-Fi fingerprint based on the Wi-Fi signal;
a user input unit configured to receive the input information from the user;
a first communication module configured to receive the Wi-Fi signal sent from the at least one of the access points and the Wi-Fi fingerprint identification information, and transmit the first Wi-Fi fingerprint to the navigation service server;
a navigation executing unit configured to execute the indoor navigation based on the Wi-Fi fingerprint information; and
an output unit configured to output the indoor navigation executed at the navigation executing unit.

24. The location based service system of Claim 22, wherein the navigation service server includes:

navigation service constructing unit configured to acquire the plurality of second Wi-Fi fingerprints based on moving directions and speeds of the mobile terminal, construct the plurality of Wi-Fi radio maps based on the plurality of second Wi-Fi fingerprints, and assign the Wi-Fi fingerprint identification information to the second Wi-Fi fingerprints for each of the Wi-Fi radio maps;
a database unit for storing the plurality of Wi-Fi radio maps and the Wi-Fi fingerprint identification information;
a location estimating unit configured to acquire moving direction and speed of the mobile terminal, retrieve the database unit to select a Wi-Fi radio map corresponding to the acquired moving direction and speed, estimate a current location of the mobile terminal from a second Wi-Fi fingerprint corresponding to the first Wi-Fi fingerprint based on the selected Wi-Fi radio map, and form the Wi-Fi fingerprint information based on the estimated current location and the input information; and
a second communication module configured to receive the first Wi-Fi fingerprint and the input information, and transmit the Wi-Fi fingerprint information to the mobile terminal.

25. The location based service system of Claim 24, wherein the navigation service constructing unit is configured to:

partition an indoor navigation service target region into a plurality of regions for each of the Wi-Fi radio maps to which the Wi-Fi fingerprint identification information is assigned; and
index the plurality of second Wi-Fi fingerprints to the partition regions for each of Wi-Fi radio maps.

26. The location based service system of Claim 25, wherein the fingerprint identification information includes identification information.

27. The location based service system of Claim 25, wherein the location estimating unit is configured to:

acquire moving direction and speed information of the mobile terminal;
retrieve the database unit to select a Wi-Fi radio map corresponding to the acquired moving direction and speed information;
decide a partition region corresponding to the first Wi-Fi fingerprint;
calculate distances between the first Wi-Fi fingerprint and each of the second Wi-Fi fingerprints belonging to the decided partition region;
compare the calculated distances to detect a second Wi-Fi fingerprint corresponding to the shortest distance as a Wi-Fi fingerprint which is closest to the first Wi-Fi fingerprint; and
estimate a location of the detected second Wi-Fi fingerprint as the location of the mobile terminal.

28. The location based service system of Claim 27, wherein the location estimating unit is further configured to:

decide the decided partition region and a region which is close to the decided partition region as a search region;
decide a gathering location of a second Wi-Fi fingerprint which is closest to the first Wi-Fi fingerprint among the second Wi-Fi fingerprints of the search region as an estimation location; and
determine whether a partition region corresponding to the estimation location is identical to the decided partition region, if it is determined that the partition region corresponding to the estimation location is not identical to the decided partition region, disregard the estimation location.

29. The location based service system of Claim 25, wherein the location estimating unit is configured to:

detect the optimal route from the current location to the final destination based on the current location and the input information for selected Wi-Fi radio map;
detect partition regions corresponding to the optimal route;
extract Wi-Fi fingerprint identification information corresponding to the detected partition regions; and
form the Wi-Fi fingerprint information including second Wi-Fi fingerprints corresponding to the extracted Wi-Fi fingerprint identification information.

30. A method of performing an indoor navigation in a location based service system including a plurality of access points, which are installed in an indoor environment and configured to send Wi-Fi signals including access point identification information; a mobile terminal and a navigation service server, the method comprising:

a) at the navigation service server, constructing a plurality of Wi-Fi radio maps based on a plurality of first Wi-Fi fingerprints acquired at a plurality of locations of the indoor environment;
b) at the mobile terminal, receiving a Wi-Fi signal from at least one of the access points and forming a second Wi-Fi fingerprint based on the received Wi-Fi signal;
c) at the navigation service server, selecting a Wi-Fi radio map for estimating a location of the mobile terminal among the plurality of Wi-Fi radio maps; and
d) at the navigation service server, estimating the location of the mobile terminal by using a first Wi-Fi fingerprint corresponding to the second Wi-Fi fingerprint based on the selected Wi-Fi radio map, and forming position information including the estimated location,

wherein the first and second Wi-Fi fingerprints include received signal strength of the Wi-Fi signal and the access point identification information of the access point that sends the Wi-Fi signal.

31. The method of Claim 30, wherein the access point identification information includes a media access control address.

32. The method of Claim 30, wherein the Wi-Fi radio map includes at least one of a mobile Wi-Fi radio map reflecting a signal dragging phenomenon which occurs by the movement of the mobile terminal and a fixed Wi-Fi radio map which does not reflect the signal dragging phenomenon.

33. The method of Claim 30, wherein the step a) comprises:

a1) constructing the plurality of Wi-Fi radio maps corresponding to the plurality of first Wi-Fi fingerprints in consideration of moving directions and speeds of the mobile terminal;
a2) partitioning an indoor navigation service target region into a plurality of regions for each of the Wi-Fi radio maps;
a3) classifying the plurality of first Wi-Fi fingerprints by the respective partition regions for each of the Wi-Fi radio maps; and
a4) constructing access point indexes for mapping a partition region to which each of the first Wi-Fi fingerprints belongs with the access point identification information of the access points which charge the partition region.

34. The method of Claim 33, wherein the step a2) further comprises:

setting an accuracy target value and a precision target value for estimating the location of the mobile terminal;
initializing the size of the partition regions for each of the Wi-Fi radio maps;
calculating accuracy and precision of a location estimation of the mobile terminal for the initialized size of the partition regions;
comparing the calculated precision with the precision target value, if it is determined that the calculated precision does not satisfy the precision target value, ease and reset the accuracy target value and the precision target value;
if it is determined that the calculated precision satisfies the precision target value, comparing the calculated accuracy with the accuracy target value, if it is determined that the calculated accuracy does not satisfy the accuracy target value, increasing the size of the partition regions to a predetermined size;
if it is determined that the calculated accuracy satisfies the accuracy target value, setting the size of the partition regions as the final size of the partition regions.

35. The method of Claim 33, wherein the step a4) comprises:

selecting first Wi-Fi fingerprints including the access point identification information of the same access points from the first Wi-Fi fingerprints included in the Wi-Fi radio map; and

detecting a partition region that the selected first Wi-Fi fingerprints are gathered and construct connection information between the access point identification information of the access point and the detected partition region.

36. The method of Claim 30, wherein the step c) comprises:

acquiring moving direction and speed information of the mobile terminal;

selecting a Wi-Fi radio map corresponding to the acquired moving direction and speed information.

37. The method Claim 33, wherein the step d) comprises:

deciding a partition region corresponding to the second Wi-Fi fingerprint based on the access point indexes;

calculating distances between the second Wi-Fi fingerprint and each of the first Wi-Fi fingerprints which belong to the decided partition region;

comparing the distances to detect a first Wi-Fi fingerprint corresponding to the shortest distance as a Wi-Fi fingerprint which is closest to the second Wi-Fi fingerprint;

estimating a location of the detected first Wi-Fi fingerprint as the location of the mobile terminal; and

forming location information including the estimated location.

38. The method of Claim 37, wherein the step d) further comprises:

deciding the decided partition region and regions which are close to the decided partition region, as a search region;

deciding a gathering location of a first Wi-Fi fingerprint which is closest to the second Wi-Fi fingerprint among the first Wi-Fi fingerprints of the search region, as an estimated location; and

determining whether a partition region corresponding to the estimated location is identical to the decided partition region, if it is determined that the partition region corresponding to the estimated location is not identical to the decided partition region, disregarding the estimated location.

39. The method of Claim 30, wherein the step a) comprises:

a1) constructing the plurality of Wi-Fi radio maps based on the plurality of first Wi-Fi fingerprints; and

a2) analyzing the plurality of first Wi-Fi fingerprints for each of the Wi-Fi radio maps to assign an index key to each of the first Wi-Fi fingerprints.

40. The method of Claim 39, wherein the step a2) comprises:

detecting signal strength of the Wi-Fi signal corresponding to each of the access points included in each of the first Wi-Fi fingerprints;

comparing the detected signal strength to extract the predetermined number of access points in order of signal strength; and

assigning the extracted access points as the index key to each of the first Wi-Fi fingerprints.

41. The method of Claim 39, wherein the step d) comprises:

detecting signal strength of the Wi-Fi signal by the respective access points included in the second Wi-Fi fingerprint;

comparing the detected signal strength to extract the predetermined number of access points in order of signal strength;

detecting a first Wi-Fi fingerprint to which the extracted access points are assigned as the index key from the selected Wi-Fi radio map; and

estimating a location of the detected first Wi-Fi fingerprint as the location of the mobile terminal.

42. The method of Claim 30, wherein the step a) comprises:

detecting signal strength of the Wi-Fi signal based on variance in signal strength and a receiving probability of the Wi-Fi signal by the respective access points included in each of the plurality of first Wi-Fi fingerprints;
extracting the predetermined number of access points in order of a receiving probability of receiving the strongest Wi-Fi signal based on the detected signal strength, and variance and receiving probability for each of the plurality of second Wi-Fi fingerprints; and
assigning the extracted access points to each of the first Wi-Fi fingerprints as the index key.

43. The method of Claim 42, wherein the step d) comprises:

receiving a plurality of second Wi-Fi fingerprints provided from the mobile terminal;
detecting signal strength of the Wi-Fi signal based on variance in signal strength and a receiving probability of the Wi-Fi signal by the respective access points for each of the second Wi-Fi fingerprints;
extracting the predetermined number of access points in order of a receiving probability of the strongest Wi-Fi signal based on the detected signal strength, and variance and receiving probability;
detecting a first Wi-Fi fingerprint to which the extracted access points are assigned as the index key from the selected Wi-Fi radio map; and
estimating a location of the detected first Wi-Fi fingerprint as the location of the mobile terminal.

44. The method of Claim 30, wherein the step a) comprises:

constructing the plurality of Wi-Fi radio maps based on the plurality of first Wi-Fi fingerprints;
setting a Wi-Fi fingerprint confusion area that a floor-level error occurs on the plurality of Wi-Fi radio maps.

45. The method of Claim 44, wherein the step d) comprises:

d1) estimating the location of the mobile terminal from the selected Wi-Fi radio map based on the second Wi-Fi fingerprint;
d2) determining whether the estimated location is the Wi-Fi fingerprint confusion area, if it is determined that the estimated location is the Wi-Fi fingerprint confusion area, analyzing the second Wi-Fi fingerprint to detect the number of access points included in the second Wi-Fi fingerprint;
d3) comparing the detected number of access points with a predetermined threshold, if it is determined that the detected number of the access points is equal to or less than the predetermined threshold, performing a floor-level location correction based on the second Wi-Fi fingerprint; and
d4) reestimating the location of the mobile terminal at the corrected floor-level location based on the second Wi-Fi fingerprint.

46. The method of Claim 45, wherein the step d3) comprises:

performing the floor-level location correction of the estimated location in consideration of a set similarity between the second Wi-Fi fingerprint and each of the first Wi-Fi fingerprints corresponding to the Wi-Fi fingerprint confusion area by using Jaccard's coefficient.

47. The method of Claim 30, further comprising:

e) at the mobile terminal, executing the indoor navigation for displaying the current location information on a map corresponding to the indoor environment based on the location information and displaying route information from the current location to the final destination; and
f) at the mobile terminal, outputting the indoor navigation.

48. A method of performing an indoor navigation in a location based service system including a plurality of access points, which are installed in an indoor environment and configured to send Wi-Fi signals including access point identification information; a mobile terminal and a navigation service server, the method comprising:

a) at the navigation service server, constructing a plurality of Wi-Fi radio maps based on a plurality of first Wi-Fi fingerprints acquired at a plurality of locations of the indoor environment;
b) assigning Wi-Fi fingerprint identification information to the first Wi-Fi fingerprints for each of the Wi-Fi radio maps;
c) at the mobile terminal, receiving a Wi-Fi signal from at least one of the access points and forming a second Wi-Fi fingerprint based on the received Wi-Fi signal;

d) at the navigation service server, estimating a location of the mobile terminal based on a Wi-Fi radio map for estimating the location of the mobile terminal among the plurality of the Wi-Fi radio maps and the second Wi-Fi fingerprint;

e) at the mobile terminal, receiving input information for setting a final destination from a user;

f) at the navigation service server, extracting the Wi-Fi fingerprint identification information of the first Wi-Fi fingerprints corresponding to an optimal route from the current location to final destination based on the estimated current location and the input information to thereby form the Wi-Fi fingerprint information; and

g) at the mobile terminal, executing an indoor navigation based on the Wi-Fi fingerprint information,

wherein the first and second Wi-Fi fingerprints include a received signal strength of the Wi-Fi signal and access point identification information of an access point that sends the Wi-Fi signal.

49. The method of Claim 48, wherein the access point identification information includes a media access control address.

50. The method of Claim 48, wherein the Wi-Fi fingerprint identification information includes identification information.

51. The method of Claim 48, wherein the Wi-Fi radio map includes at least one of a mobile Wi-Fi radio map reflecting a signal dragging phenomenon which occurs by the movement of the mobile terminal and a fixed Wi-Fi radio map which does not reflect the signal dragging phenomenon.

52. The method of Claim 48, wherein the step a) comprises:

acquiring the plurality of first Wi-Fi fingerprints based on moving directions and speeds of the mobile terminal; and constructing the plurality of Wi-Fi radio maps based on the plurality of first Wi-Fi fingerprints by the respective moving directions and speeds.

53. The method of Claim 48, wherein the step b) further comprises:

b1) partitioning an indoor navigation service target region into a plurality of regions for each of the Wi-Fi radio maps to which the Wi-Fi fingerprint identification information is assigned; and
b2) indexing the plurality of first Wi-Fi fingerprints to the partition regions for each of Wi-Fi radio maps.

54. The method of Claim 53, wherein the step b1) further comprises:

setting an accuracy target value and a precision target value for estimating the location of the mobile terminal; initializing the size of the partition regions for each of the Wi-Fi radio maps; calculating accuracy and precision for estimating the location of the mobile terminal at the size of the corresponding partition regions; comparing the calculated precision with the precision target value, if it is determined that the calculated precision does not satisfy the precision target value, easing and resetting the accuracy target value and the precision target value; if it is determined that the calculated precision satisfies the precision target value, comparing the calculated accuracy with the accuracy target value, if it is determined that the calculated accuracy does not satisfy the accuracy target value, increasing the size of the partition regions into a predetermined size; if it is determined that the calculated accuracy satisfies the accuracy target value, setting the size of the partition regions as a final size of the partition regions.

55. The method of Claim 48, wherein the step d) comprises:

d1) acquiring moving direction and speed information of the mobile terminal;
d2) selecting a Wi-Fi radio map corresponding to the acquired moving direction and speed information among the plurality of Wi-Fi radio maps; and
d3) estimating a current location of the mobile terminal from the first Wi-Fi fingerprint corresponding to the second Wi-Fi fingerprint based on the selected Wi-Fi radio map.

56. The method of Claim 55, wherein the step d3) comprises:

deciding a partition region corresponding to the second Wi-Fi fingerprint for the selected Wi-Fi radio map;

calculating distances between the second Wi-Fi fingerprint and each of the first Wi-Fi fingerprints belonging to the decided partition region;

comparing the calculated distances to detect a first Wi-Fi fingerprint corresponding to the shortest distance as a Wi-Fi fingerprint which is closest to the second Wi-Fi fingerprint; and

estimating a position of the detected first Wi-Fi fingerprint as the location of the mobile terminal.

57. The method of Claim 56, wherein the step d3) further comprises:

deciding the decided partition region and a region which is close to the decided partition region as a search region;

deciding a gathering location of a first Wi-Fi fingerprint which is closest to the second Wi-Fi fingerprint among the first Wi-Fi fingerprints of the search region as an estimation location; and

determining whether a partition region corresponding to the estimation location is identical to the decided partition region, if it is determined that the partition region corresponding to the estimation location is not identical to the decided partition region, disregarding the estimation location.

58. The method of Claim 55, wherein the step f) comprises:

detecting the optimal route from the current location to the final destination based on the current location and the input information for the selected Wi-Fi radio map;

detecting partition regions corresponding to the optimal route;

extracting Wi-Fi fingerprint identification information corresponding to the detected partition regions; and

forming the Wi-Fi fingerprint information including second Wi-Fi fingerprints corresponding to the extracted Wi-Fi fingerprint identification information.

[Figure 1]

<u>100</u>

110a — ACCESS POINT

110b — ACCESS POINT

110n — ACCESS POINT

120
MOBILE TERMINAL

130
NAVIGATION SERVICE SERVER

[Figure 2]

<u>120</u>

210
FIRST COMMUNICATION MODULE

220
FINGERPRINT FORMING UNIT

230
USER INPUT UNIT

NAVIGATION EXECUTING UNIT

STORAGE UNIT — 240

250

OUTPUT UNIT

260

[Figure 3]

130

310

320

| SECOND COMMUNICATION MODULE | NAVIGATION SERVICE CONSTRUCTING UNIT |

| LOCATION ESTIMATING UNIT | DATABASE UNIT |

340

330

[Figure 4]

START

CONSTRUCTING A PLURALITY OF WI-FI RADIO MAPS — S402

PARTITIONING INDOOR NAVIGATION SERVICE TARGET REGION INTO A PLURALITY OF REGINOS — S404

CLASSIFYING Wi-Fi FINGERPRITNS — S406

CONSTRUCTING ACCESS POINT INDEXS — S408

END

[Figure 5]

A1     A2     A3

estimating location

{A1}     {A2, A3}     {A2}

Wi-Fi fingerprint

Accuracy = 2/3 = 66.7%
Precision = 1/(4/3) = 75%

A2, A3 intergration

A1     A2

estimating location

{A1}     {A2, A3}     {A2}

Accuracy = 3/3 = 100%
Precision = 1/(5/3) = 60%

[Figure 6]

[Figure 7]

constructing Wi-Fi radio maps by moving direction and speed

↓

partitioning regions

↓

classifying gathering data by the partition region

↓

constructing AP indexes based on partition regions

fingerprint gathering position list
$(a_1, a_2, a_3, a_4, a_5, \cdots a_{19}, a_{20})$

gathering position list by the partition region

$A_1 = \{a_1, a_2, a_3\}$, $A_2 = \{a_4, a_5, a_6\}$
$A_3 = \{a_7, a_8\}$, $A_4 = \{a_9, a_{10}, a_{11}\}$
$A_5 = \{a_{12}, a_{13}, a_{14}\}$, $A_6 = \{a_{15}, a_{16}\}$
$A_7 = \{a_{17}, a_{18}, a_{19}, a_{20}\}$

+

Wi-Fi fingerprint by the gathering position

$[a_1, \rightarrow \{<x_1, ->, <x_2, ->, \ldots\}]$
$[a_2, \rightarrow \{<x_1, ->, <x_3, ->, \ldots\}]$
$[a_3, \rightarrow \{<x_2, ->, <x_4, ->, \ldots\}]$
$[a_4, \rightarrow \{<x_3, ->, <x_4, ->, \ldots\}]$
......

AP Index

$X_1 = \{A_1\}$
$X_2 = \{A_1\}$
$X_3 = \{A_1, A_2\}$
$X_4 = \{A_1, A_2\}$
......

[Figure 8]

```
                    START
                      │
                      ▼
   ┌─────────────────────────────────────┐
   │  ACQUIRING MOVING DIRECTION AND      │── S802
   │        SPEED INFORMATINO             │
   └─────────────────────────────────────┘
                      │
                      ▼
   ┌─────────────────────────────────────┐
   │       SELECTING Wi-Fi RADIO MAP      │── S804
   └─────────────────────────────────────┘
                      │
                      ▼
   ┌─────────────────────────────────────┐
   │      RECEIVING Wi-Fi FINGERPRINT     │── S806
   └─────────────────────────────────────┘
                      │
                      ▼
   ┌─────────────────────────────────────┐
   │       DECIDING PARTITION REGION      │── S808
   └─────────────────────────────────────┘
                      │
                      ▼
   ┌─────────────────────────────────────┐
   │        CALCULATING DISTANCES         │── S810
   └─────────────────────────────────────┘
                      │
                      ▼
   ┌─────────────────────────────────────┐
   │  COMPARING THE CALCULATED DISTANCES  │── S812
   └─────────────────────────────────────┘
                      │
                      ▼
   ┌─────────────────────────────────────┐
   │       DETECTING THE SHORTEST         │── S814
   │         Wi-Fi FINGERPRINT            │
   └─────────────────────────────────────┘
                      │
                      ▼
   ┌─────────────────────────────────────┐
   │     FORMING LOCATION INFORMATION     │── S816
   └─────────────────────────────────────┘
                      │
                      ▼
                     END
```

[Figure 9]

```
                    ┌─────────┐
                    │  START  │
                    └────┬────┘
                         │
                         ▼
        ┌──────────────────────────────────┐
        │   DECIDING A BELONGING REGION     │── S902
        └────────────────┬─────────────────┘
                         │
                         ▼
        ┌──────────────────────────────────┐
        │     DECIDING A SEARCH REGION      │── S904
        └────────────────┬─────────────────┘
                         │
                         ▼
        ┌──────────────────────────────────┐
        │     DETECTING Wi-Fi FINGERPRINT   │── S906
        └────────────────┬─────────────────┘
                         │
                         ▼
        ┌──────────────────────────────────┐
        │  DECIDING AN ESTIMATING LOCATION  │── S908
        └────────────────┬─────────────────┘
                         │
                         ▼
     YES           ◇─────────────◇
  ┌──────────────  │  IDENTIFY?  │── S910
  │                ◇─────────────◇
  │                      │ NO
  │                      ▼
  │     ┌──────────────────────────────────┐
  │     │   DISREGARDING LOCATION           │── S912
  │     │   ESTIMATING RESULT               │
  │     └────────────────┬─────────────────┘
  │                      │
  └──────────────────────┤
                         ▼
                    ┌─────────┐
                    │   END   │
                    └─────────┘
```

[Figure 10]

[Figure 11]

(a)

(b)

[Figure 12]

1200

1210a — ACCESS POINT

1210b — ACCESS POINT

1210n — ACCESS POINT

1220
MOBILE TERMINAL

1230
NAVIGATION SERVICE SERVER

[Figure 13]

1230

1310
SECOND COMMUNICATION MODULE

1320
NAVIGATION SERVICE CONSTRUCTING UNIT

1340
LOCATION ESTIMATING UNIT

1330
DATABASE UNIT

[Figure 14]

[Figure 15]

[Figure 16]

START

ACQUIRING MOVING DIRECTION AND SPEED INFORMATINO — S1602

SELECTING A Wi-Fi RADIO MAP — S1604

RECEIVING Wi-Fi FINGERPRINT — S1606

ANALYZING THE RECEIVED Wi-Fi FINGERPRINT — S1608

ESTIMATING LOCATION CORRESPONDING TO THE RECEIVED Wi-Fi FINGERPRINT — S1610

FORMING LOCATION INFORMATION — S1612

END

[Figure 17]

[Figure 18]

1800

1810a — ACCESS POINT

1810b — ACCESS POINT

1820
MOBILE TERMINAL

1830
NAVIGATION SERVICE SERVER

1810n — ACCESS POINT

[Figure 19]

1830

1910
SECOND COMMUNICATION MODULE

1920
NAVIGATION SERVICE CONSTRUCTING UNIT

1940
LOCATION ESTIMATING UNIT

1930
DATABASE UNIT

[Figure 20]

[Figure 21]

```
                        ( START )
                            │
                            ▼
S2102 ─┐   ┌──────────────────────────────────┐
       └───│  ACQUIRING MOVING DIRECTION AND   │
           │         SPEED INFORMATION          │
           └──────────────────────────────────┘
                            │
                            ▼
S2104 ─┐   ┌──────────────────────────────────┐
       └───│      SELECTING A Wi-Fi RADIO MAP  │
           └──────────────────────────────────┘
                            │
                            ▼
S2106 ─┐   ┌──────────────────────────────────┐
       └───│      RECEIVING Wi-Fi FINGERPRINT  │
           └──────────────────────────────────┘
                            │
                            ▼
S2108 ─┐   ┌──────────────────────────────────┐
       └───│  ESTIMATING LOCATION OF MOBILE TERMINAL │
           └──────────────────────────────────┘
                            │
                            ▼
S2110 ─┐        ╱ ╲            NO
       └──────<  WFCA?  >──────────────────┐
                ╲ ╱                         │
                 │ YES                      │
                 ▼                          │
S2112 ─┐   ┌──────────────────────────────┐ │
       └───│ ANALYZING THE RECEIVED Wi-Fi  │ │
           │         FINGERPRINT            │ │
           └──────────────────────────────┘ │
                            │                │
                            ▼                │
S2114 ─┐   ┌──────────────────────────────┐ │
       └───│ DETECTING THE NUMBER OF ACCESS │ │
           │          POINTS                │ │
           └──────────────────────────────┘ │
                            │                │
                            ▼                │
                    ╱         ╲   NO         │
S2116 ─┐          ╱  THE NUMBER  ╲───────────┤
       └────────<   OF ACCESS      >         │
                  ╲ POINTS ≤ THRESHOLD╱      │
                    ╲   VALUE ?     ╱        │
                       │ YES                 │
                       ▼                     │
S2118 ─┐   ┌──────────────────────────────┐ │
       └───│ PERFORMING FLOOR-LEVEL LOCATION│ │
           │  CORRECTION OF MOBILE TERMINAL │ │
           └──────────────────────────────┘ │
                       │                     │
                       ▼                     │
S2120 ─┐   ┌──────────────────────────────┐ │
       └───│     REESTIMATING LOCATION OF   │ │
           │        MOBILE TERMINAL         │ │
           └──────────────────────────────┘ │
                       │◄────────────────────┘
                       ▼
S2122 ─┐   ┌──────────────────────────────┐
       └───│    FORMING LOCATION INFORMATION │
           └──────────────────────────────┘
                       │
                       ▼
                    ( END )
```

[Figure 22]

2200

2210a — ACCESS POINT

2210b — ACCESS POINT

2210n — ACCESS POINT

2220 MOBILE TERMINAL

2230 NAVIGATION SERVICE SERVER

[Figure 23]

2220

2330 — USER INPUT UNIT

2310 — FIRST COMMUNICATION MODULE

2320 — FINGERPRINT FORMING UNIT

2350 — NAVIGATION EXECUTING UNIT

2340 — STORAGE UNIT

2360 — OUTPUT UNIT

[Figure 24]

2230

2410

2420

| SECOND COMMUNICATION MODULE | NAVIGATION SERVICE CONSTRUCTING UNIT |
|---|---|

| LOCATION ESTIMATING UNIT | DATABASE UNIT |
|---|---|

2440

2430

[Figure 25]

START

CONSTRUCTING A PLURALITY OF Wi-Fi RADIO MAPS — S2502

ASSIGNING Wi-Fi FINGERPRINT IDENTIFICATION INFORMATION — S2504

PARTITIONING INDOOR NAVIGATION SERVICE TARGET REGION INTO A PLURALITY OF REGINOS — S2506

INDEXING Wi-Fi FINGERPRINTS — S2508

END

[Figure 26]

● fingerprint gathering location

[Figure 27]

● fingerprint gathering location

[Figure 28]

| B1 | 1, 2, 8, 10 | B8 | 23, 26 |
|----|-------------|-----|--------|
| B2 | 3, 4 | B9 | 24, 27 |
| B3 | 5, 6, 7 | B10 | 25, 28, 34 |
| B4 | 9, 11, 17 | B11 | 29, 36, 38 |
| B5 | 18, 19 | B12 | 30, 31, 32, 33 |
| B6 | 12, 13, 14, 20, 21, 22 | B13 | 35, 37, 39 |
| B7 | 15, 16 | | |

● fingerprint gathering location

[Figure 29]

```
                    ┌─────────┐
                    │  START  │
                    └────┬────┘
                         │
         ┌───────────────▼───────────────┐
         │  ACQUIRING MOVING DIRECTION AND│────  S2902
         │       SPEED INFORMATION        │
         └───────────────┬───────────────┘
                         │
         ┌───────────────▼───────────────┐
         │    SELECTING A Wi-Fi RADIO MAP │────  S2904
         └───────────────┬───────────────┘
                         │
         ┌───────────────▼───────────────┐
         │    RECEIVING Wi-Fi FINGERPRINT │────  S2906
         └───────────────┬───────────────┘
                         │
         ┌───────────────▼───────────────┐
         │    ESTIMATING LOCATION OF MOBILE│────  S2908
         │            TERMINAL            │
         └───────────────┬───────────────┘
                         │
         ┌───────────────▼───────────────┐
         │    RECEIVING INPUT INFORMATION │────  S2910
         └───────────────┬───────────────┘
                         │
         ┌───────────────▼───────────────┐
         │     DETECTING OPTIMAL ROUTE    │────  S2912
         └───────────────┬───────────────┘
                         │
         ┌───────────────▼───────────────┐
         │    DETECTING PARTITION REGIONS │
         │  CORRESPONDING TO THE DETECTED │────  S2914
         │          OPTIMAL ROUTE         │
         └───────────────┬───────────────┘
                         │
         ┌───────────────▼───────────────┐
         │    EXTRACTING Wi-Fi FINGERPRINT│
         │    IDENTIFICATION INFORMATION  │
         │  CORRESPONDING TO THE DETECTED │────  S2916
         │        PARTITION REGIONS       │
         └───────────────┬───────────────┘
                         │
         ┌───────────────▼───────────────┐
         │ FORMING Wi-Fi FINGERPRINT INFORMATION│────  S2918
         └───────────────┬───────────────┘
                         │
                    ┌────▼────┐
                    │   END   │
                    └─────────┘
```

[Figure 30]

● fingerprint gathering location